(19) **Europäisches Patentamt / European Patent Office / Office européen des brevets**

(11) **EP 4 203 369 A1**

(12) **EUROPEAN PATENT APPLICATION**
published in accordance with Art. 153(4) EPC

(43) Date of publication:
28.06.2023 Bulletin 2023/26

(21) Application number: 21858667.5

(22) Date of filing: 23.08.2021

(51) International Patent Classification (IPC):
$H04L\ 5/00$ (2006.01)     $H04L\ 5/14$ (2006.01)
$H04L\ 1/08$ (2006.01)     $H04W\ 72/04$ (2023.01)
$H04W\ 72/12$ (2023.01)

(52) Cooperative Patent Classification (CPC):
H04L 1/08; H04L 5/00; H04L 5/14; H04W 72/04;
H04W 72/12

(86) International application number:
PCT/KR2021/011220

(87) International publication number:
WO 2022/039580 (24.02.2022 Gazette 2022/08)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 21.08.2020 KR 20200105481
15.10.2020 KR 20200133557
30.07.2021 KR 20210100285

(71) Applicant: LG ELECTRONICS, INC.
Seoul 07336 (KR)

(72) Inventors:
• YOU, Hyangsun
Seoul 06772 (KR)
• KO, Hyunsoo
Seoul 06772 (KR)
• KIM, Jaehyung
Seoul 06772 (KR)
• YANG, Suckchel
Seoul 06772 (KR)
• KIM, Seonwook
Seoul 06772 (KR)
• BAE, Duckhyun
Seoul 06772 (KR)

(74) Representative: Mooser, Sebastian Thomas
Wuesthoff & Wuesthoff
Patentanwälte PartG mbB
Schweigerstraße 2
81541 München (DE)

(54) **METHOD FOR RESOURCE FOR REPEATEDLY TRANSMITTING PUSCH IN ORDER FOR COVERAGE EXPANSION, AND DEVICE USING SAME**

(57) The present specification provides a method, carried out by a terminal, for repeatedly transmitting a physical uplink shared channel (PUSCH) in a wireless communication system, the method comprising: carrying out an initial access procedure with a base station; and repeatedly transmitting a PUSCH to the base station on at least one first time resource or second time resource, wherein a half-duplex operation is carried out on the first time resource, a full-duplex operation is carried out on the second time resource, and uplink transmission timing for the first time resource and uplink transmission timing for the second time resource are configured independently of each other.

FIG. 19

EP 4 203 369 A1

**Description**

**BACKGROUNDS**

Field of the description

This specification relates to wireless communication.

Related Art

As a growing number of communication devices require higher communication capacity, there is a need for advanced mobile broadband communication as compared to existing radio access technology (RAT). Massive machine-type communication (MTC), which provides a variety of services anytime and anywhere by connecting a plurality of devices and a plurality of objects, is also one major issue to be considered in next-generation communication. In addition, designs for communication systems considering services or a user equipment (LTE) sensitive to reliability and latency are under discussion. Introduction of next-generation RAT considering enhanced mobile broadband communication, massive MTC, and ultra-reliable and low-latency communication (URLLC) is under discussion. In this specification, for convenience of description, this technology may be referred to as new RAT or new radio (NR).

Meanwhile, in the present specification, when considering FD environments such as SB-FD and SS-FD, it is intended to provide configurations for performing PUSCH repetition.

**SUMMARY**

According to an embodiment of the present specification, the PUSCH is repeatedly transmitted to the base station on at least one first time resource or a second time resource, a half-duplex operation is performed on the first time resource, and a full duplex operation is performed on the second time resource. Uplink transmission timing for the first time resource and uplink transmission timing for the second time resource may be set independently of each other.

According to the present specification, latency reduction and coverage extension effects can be obtained by using more uplink resources for PUSCH repetition.

Effects obtainable through specific examples of the present specification are not limited to the effects listed above. For example, there may be various technical effects that a person having ordinary skill in the related art can understand or derive from this specification. Accordingly, the specific effects of the present specification are not limited to those explicitly described in the present specification, and may include various effects that can be understood or derived from the technical features of the present specification.

**BRIEF DESCRIPTION OF THE DRAWINGS**

FIG. 1 illustrates a system structure of a New Generation Radio Access Network (NG-RAN) to which NR is applied.
FIG. 2 illustrates a functional division between an NG-RAN and a 5GC.
FIG. 3 illustrates an example of a frame structure that may be applied in NR.
FIG. 4 shows an example of a frame structure for a new radio access technology.
FIG. 5 shows an example of a 5G usage scenario to which the technical features of the present specification can be applied.
FIG. 6 schematically illustrates an example of SB-FD and SS-FD.
FIG. 7 schematically illustrates an example in which time resources operating in half duplex (HD) and time resources operating in full duplex (FD) such as SB-FD or SS-FD coexist.
FIG. 8 schematically illustrates an example of PUSCH repetition type A.
FIG. 9 schematically illustrates an example of PUSCH repetition type B.
FIG. 10 shows a comparison between the nominal repetition and the actual repetition, according to an example.
FIG. 11 schematically illustrates an example of a first time resource and a second time resource.
FIG. 12 schematically illustrates another example of a first time resource and a second time resource.
FIG. 13 schematically illustrates an embodiment of repetitive transmission.
FIG. 14 schematically illustrates an example of a method of performing PUSCH repetition according to the number of symbol resources.
FIG. 15 schematically illustrates an example of PUSCH repetition transmission resources.
FIG. 16 schematically illustrates an example of using uplink resources not used for PUSCH transmission for PUSCH transmission.

FIG. 17 schematically illustrates another example in which the foregoing proposal is reflected.

FIG. 18 schematically illustrates an example of TDD configuration and PUSCH repetition at this time.

FIG. 19 is a flowchart of a method of repeatedly transmitting a PUSCH according to an embodiment of the present specification.

FIG. 20 schematically illustrates an example in which UL timing is set differently according to time resources.

FIG. 21 is a flowchart of a method of repeatedly transmitting a PUSCH according to another embodiment of the present specification.

FIG. 22 is a flowchart of a method of repeatedly transmitting a PUSCH according to still another embodiment of the present specification.

FIG. 23 is a flowchart of a method of repeatedly transmitting a PUSCH from a UE point of view according to an embodiment of the present specification.

FIG. 24 is a block diagram of an apparatus for repeatedly transmitting a PUSCH from a UE point of view according to an embodiment of the present specification.

FIG. 25 is a flowchart of a method of repeatedly receiving a PUSCH from the point of view of a base station according to an embodiment of the present specification.

FIG. 26 is a block diagram of an apparatus for repeatedly receiving a PUSCH from the point of view of a base station according to an embodiment of the present specification.

FIG. 27 schematically illustrates an example of repetition of PUSCH.

FIG. 28 illustrates the communication system 1 applied to this specification.

FIG. 29 illustrates a wireless device applicable to this specification.

FIG. 30 shows another example of a wireless device applicable to the present specification.

## DESCRIPTION OF EXEMPLARY EMBODIMENTS

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultrareliable and low latency communication (URLLC) is discussed. This new technology may be called new radio access technology (new RAT or NR) in the present specification for convenience.

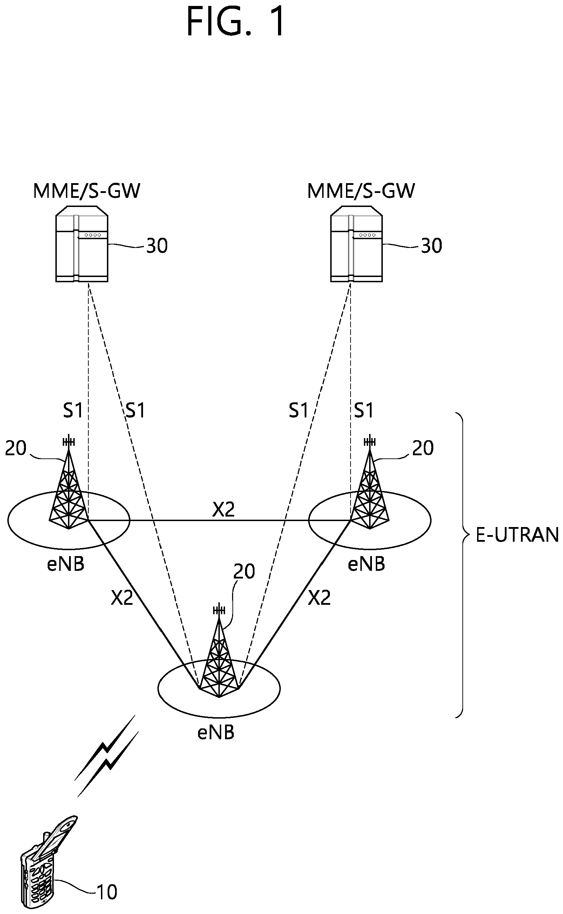

FIG. 1 illustrates a system structure of a next generation radio access network (NG-RAN) to which NR is applied.

Referring to FIG. 1, the NG-RAN may include a gNB and/or an eNB that provides user plane and control plane protocol termination to a UE. FIG. 1 illustrates the case of including only gNBs. The gNB and the eNB are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

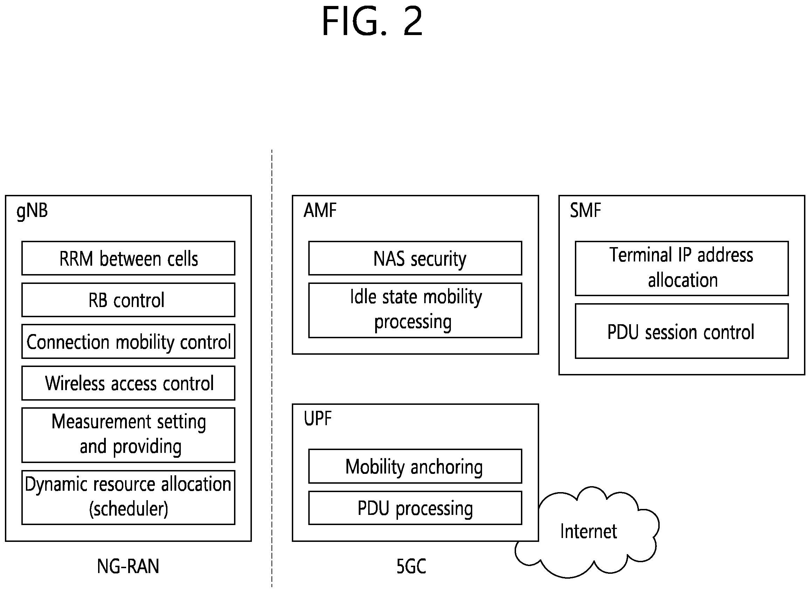

FIG. 2 illustrates a functional division between an NG-RAN and a 5GC.

Referring to FIG. 2, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

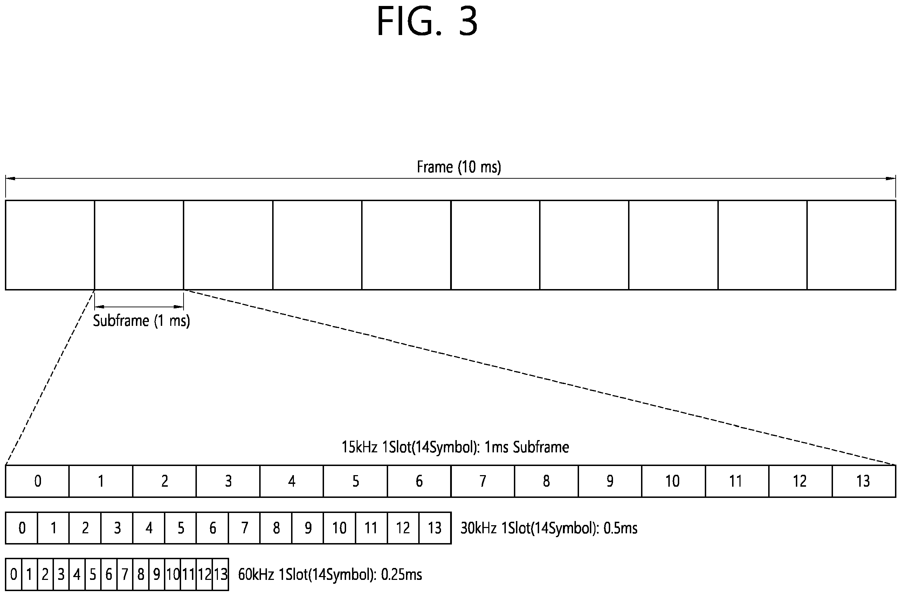

FIG. 3 illustrates an example of a frame structure that can be applied in NR.

Referring to FIG. 3, a frame may consist of 10 milliseconds (ms) and may include 10 subframes of 1 ms.

One or a plurality of slots may be included in the subframe according to the subcarrier spacing.

The following table 1 illustrates a subcarrier spacing configuration $\mu$.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

In FIG. 3, $\mu$=0, 1, 2 are exemplified. A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain. In NR, the following technologies/characteristics may be applied. <Self-contained subframe structure>

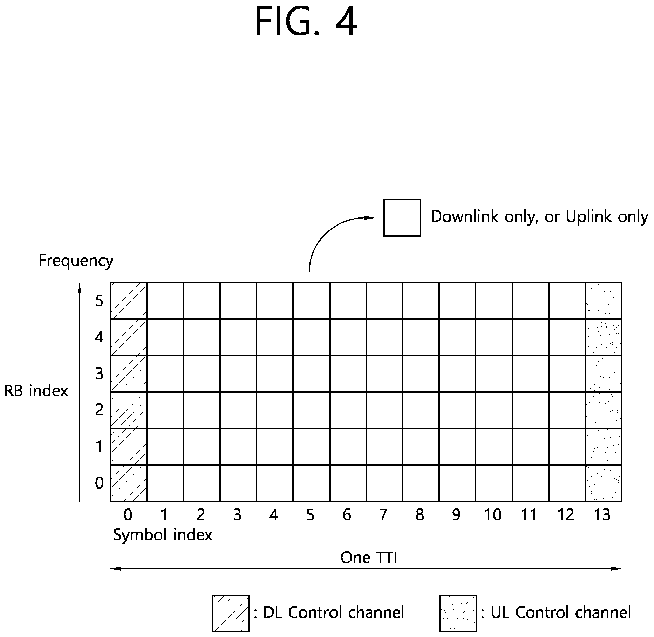

FIG. 4 shows an example of a frame structure for a new radio access technology.

In NR, a structure in which a control channel and a data channel are time-division-multiplexed within one TTI, as shown in FIG. 4, can be considered as a frame structure in order to minimize latency.

In FIG. 4, hatched areas represent downlink control areas, and black areas represent uplink control areas. The unmarked area may be used for downlink data (DL data) transmission or uplink data (UL data) transmission. DL transmission and UL transmission are sequentially performed within one subframe. A feature of this structure is that DL data can be transmitted and UL ACK/NACK (Acknowledgement/negative-acknowledgement) can be received within the subframe. Consequently, a time required from occurrence of a data transmission error to data retransmission is reduced, thereby minimizing latency in final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

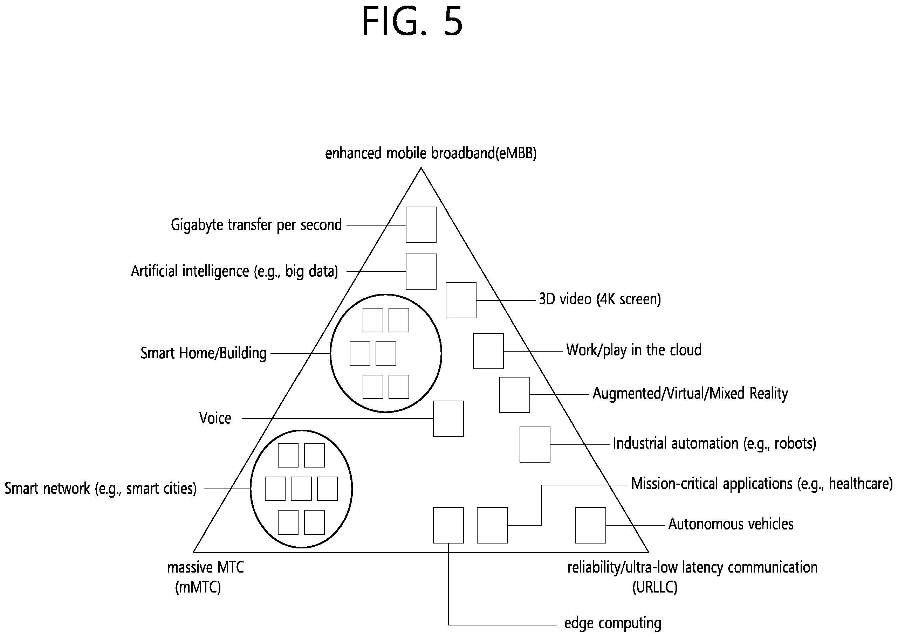

FIG. 5 shows an example of a 5G usage scenario to which the technical features of the present specification can be applied. The 5G usage scenario shown in FIG. 5 is just an example, and the technical features of the present specification may also be applied to other 5G usage scenarios not shown in FIG. 5.

Referring to FIG. 5, the three main requirements areas of 5G comprise (1) enhanced mobile broadband (eMBB) area, (2) massive machine type communication (mMTC) area, and (3) the ultra-reliable and low latency communications (URLLC) area. Some use cases may require multiple areas for optimization, while other use cases may focus on just one key performance indicator (KPI). 5G supports these diverse use cases in a flexible and reliable way.

eMBB focuses on overall improvements in data rate, latency, user density, capacity and coverage of mobile broadband access. eMBB targets a throughput of around 10 Gbps. eMBB goes far beyond basic mobile Internet access, and covers rich interactive work, media and entertainment applications in the cloud or augmented reality. Data is one of the key drivers of 5G, and we may not see dedicated voice services for the first time in the 5G era. In 5G, voice is expected to be handled simply as an application using the data connection provided by the communication system. The main causes of the increased traffic volume are the increase in content size and the increase in the number of applications requiring high data rates. Streaming services (audio and video), interactive video and mobile internet connections will become more widely used as more devices connect to the internet. Many of these applications require always-on connectivity to push real-time information and notifications to users. Cloud storage and applications are rapidly growing in mobile communication platforms, which can be applied to both work and entertainment. Cloud storage is a particular use case driving the growth of uplink data rates. 5G is also used for remote work in the cloud, requiring much lower end-to-end latency to maintain a good user experience when tactile interfaces are used. In entertainment, for example, cloud gaming and video streaming are other key factors driving the demand for mobile broadband capabilities. Entertainment is essential on smartphones and tablets everywhere, including in highly mobile environments such as trains, cars and planes. Another use case is augmented reality for entertainment and information retrieval. Here, augmented reality requires very low latency and instantaneous amount of data.

mMTC is designed to enable communication between high-volume, low-cost devices powered by batteries, and is intended to support applications such as smart metering, logistics, field and body sensors. mMTC targets 10 years of batteries and/or 1 million devices per square kilometer. mMTC enables seamless connectivity of embedded sensors in all fields and is one of the most anticipated 5G use cases. Potentially, IoT devices are predicted to reach 20.4 billion by 2020. Industrial IoT is one area where 5G is playing a key role enabling smart cities, asset tracking, smart utilities, agriculture and security infrastructure.

URLLC enables devices and machines to communicate with high reliability, very low latency and high availability, making it ideal for vehicular communications, industrial controls, factory automation, remote surgery, smart grid and public safety applications. URLLC targets latency on the order of 1 ms. URLLC includes new services that will transform industries through ultra-reliable/low-latency links, such as remote control of critical infrastructure and autonomous vehicles. This level of reliability and latency is essential for smart grid control, industrial automation, robotics, and drone control and coordination.

Next, a number of usage examples included in the triangle of FIG. 5 will be described in more detail.

5G can complement fiber-to-the-home (FTTH) and cable-based broadband (or DOCSIS) as a means of delivering streams rated at hundreds of megabits per second to gigabits per second. Such high speeds may be required to deliver TV at resolutions of 4K and beyond (6K, 8K and beyond) as well as virtual reality (VR) and augmented reality (AR). VR and AR applications include almost immersive sports events. Certain applications may require special network settings. For example, in the case of VR games, game companies may need to integrate their core servers with the network operator's edge network servers to minimize latency.

Automotive is expected to be an important new driver for 5G, with many use cases for mobile communications to vehicles. For example, entertainment for passengers requires both high capacity and high mobile broadband. The reason is that future users will continue to expect high-quality connections regardless of their location and speed. Another use case in the automotive sector is augmented reality dashboards. Drivers can identify objects in the dark above what they are viewing through the front window via an augmented reality contrast board. The augmented reality dashboard displays overlaid information to inform the driver about the distance and movement of objects. In the future, wireless modules will enable communication between vehicles, exchange of information between vehicles and supporting infrastructure, and exchange of information between vehicles and other connected devices (e.g., devices carried by pedestrians). A safety system can help reduce the risk of an accident by guiding the driver through an alternate course of action to make driving safer. The next step will be remotely controlled or self-driving vehicles. This requires very reliable and very fast communication between different autonomous vehicles and/or between vehicles and infrastructure. In the future, autonomous vehicles will perform all driving activities, leaving drivers to focus only on traffic anomalies that the vehicle itself cannot identify. The technological requirements of autonomous vehicles require ultra-low latency and ultra-high reliability to increase traffic safety to levels that humans cannot achieve.

Smart cities and smart homes, referred to as smart societies, will be embedded with high-density wireless sensor networks. A distributed network of intelligent sensors will identify conditions for cost and energy-efficient maintenance of a city or home. A similar setup can be done for each household. Temperature sensors, window and heating controllers, burglar alarms and appliances are all connected wirelessly. Many of these sensors typically require low data rates, low power and low cost. However, real-time HD video, for example, may be required in certain types of devices for surveillance.

The consumption and distribution of energy, including heat or gas, is highly decentralized, requiring automated control of distributed sensor networks. A smart grid interconnects these sensors using digital information and communication technologies to gather information and act on it. This information can include supplier and consumer behavior, enabling the smart grid to improve efficiency, reliability, affordability, sustainability of production and distribution of fuels such as electricity in an automated manner. The smart grid can also be viewed as another low-latency sensor network.

The health sector has many applications that can benefit from mobile communications. The communication system may support telemedicine, which provides clinical care at a remote location. This can help reduce barriers to distance and improve access to health services that are not consistently available in remote rural areas. It is also used to save lives in critical care and emergencies. Mobile communication-based wireless sensor networks can provide remote monitoring and sensors for parameters such as heart rate and blood pressure.

Wireless and mobile communications are becoming increasingly important in industrial applications. Wiring is expensive to install and maintain. Thus, the possibility of replacing cables with reconfigurable wireless links is an attractive opportunity for many industries. However, achieving this requires that wireless connections operate with comparable latency, reliability and capacity to cables, and that their management be simplified. Low latency and very low error probability are the new requirements that need to be connected with 5G.

Logistics and freight tracking is an important use case for mobile communications enabling the tracking of inventory and packages from anywhere using location-based information systems. Logistics and freight tracking use cases typically require low data rates, but wide range and reliable location information.

<Expansion of Coverage for NR>

Coverage is one of the key factors that telecommunication companies consider when commercializing cellular networks because it directly affects service quality and CAPEX and OPEX. Despite the importance of coverage to the success of NR commercialization, a thorough coverage evaluation and comparison with existing RATs considering all details of the NR specification has not been performed.

Compared to LTE, NR is designed to operate at much higher frequencies such as 28 GHz or 39 GHz in FR2. Many countries are also making more spectrum available, such as 3.5 GHz in FR1. These frequencies are usually on a higher frequency than LTE or 3G. Higher frequencies allow radio channels to suffer from higher path loss, making it more difficult to maintain adequate quality of service, at least equal to legacy RATs. One major mobile application of particular importance is voice services, where the average subscriber expects ubiquitous coverage at all times, wherever they are.

For FR1, NR can be deployed on newly allocated spectrum such as 3.5 GHz or reconfigured spectrum from legacy networks such as 3G and 4G. In either case, coverage will be an issue given the fact that these spectrums will likely handle key mobile services such as voice and low-speed data services.

For FR2, coverage was not thoroughly evaluated during the self-evaluation campaign for the IMT-2020 submission and was not considered in Rel-16 enhancements. In this regard, a thorough understanding of NR coverage performance is required while considering the support of the latest NR specifications.

Hereinafter, the proposal of this specification is described.

<Full duplex operation for NR>

In 5G, new service types such as XR (extended reality), AI based service, and self-driving car are emerging. These services dynamically change traffic in both DL and UL directions, and has the characteristic of requiring low latency to transmit packets. In 5G service, traffic load will increase explosively to support these various new use cases.

On the other hand, the existing semi-static or dynamic TDD UL/DL configuration has limitations such as transmission time delay and interference between operators. Existing FDD schemes have limitations in terms of efficient frequency resource utilization for DL/UL directions.

Therefore, introduction of a full duplex operation in a single carrier is being discussed for low latency and efficient resource utilization in NR.

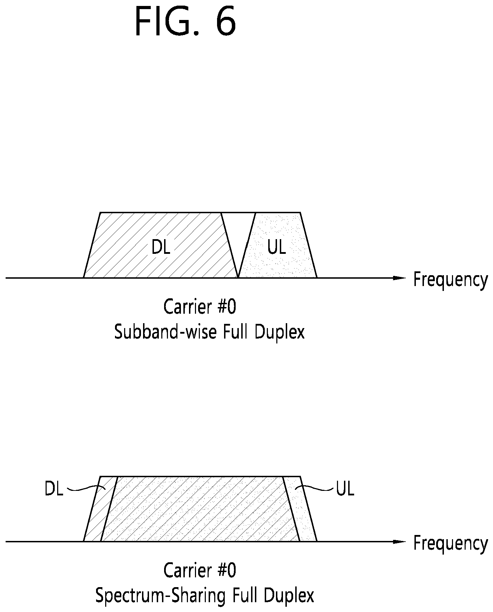

FIG. 6 schematically illustrates an example of SB-FD and SS-FD.

As an example of a method of applying full duplex in an intra-carrier, subband-wise full duplex (SB-FD) and spectrum-sharing full duplex (SS-FD) may be considered as shown in FIG. 6. In the case of SB-FD, transmission and reception of DL and UL are performed using different frequency resources in the same carrier. That is, DL and UL have different frequency resources for the same time resource. In the case of SS-FD, transmission and reception of DL and UL are performed through the same frequency resource or overlapped frequency resources in the same carrier. That is, DL and UL may have the same or overlapping frequency resources for the same time resource.

This full-duplex operation may be used in combination with a conventional half-duplex operation. In the conventional half-duplex-based TDD operation, only some time resources can be used for full-duplex operation. An SB-FD or SS-FD operation may be performed on a time resource for performing a full duplex operation.

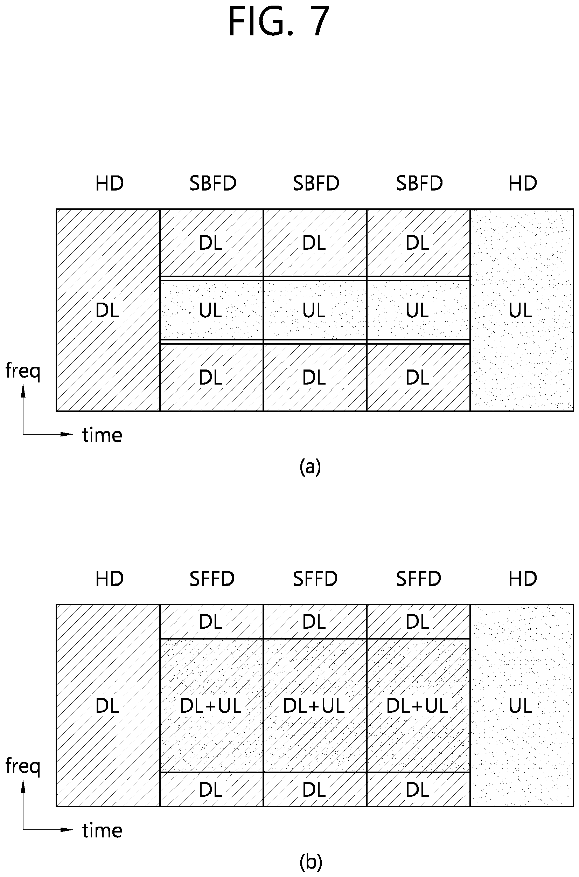

FIG. 7 schematically illustrates an example in which time resources operating in half duplex (HD) and time resources operating in full duplex (FD) such as SB-FD or SS-FD coexist.

In (a) of FIG. 7, some time resources operate in SB-FD and the remaining time resources operate in HD. In (b) of FIG. 7, some time resources operate in SS-FD and the remaining time resources operate in HD. In this case, the unit of time resource may be, for example, a slot or a symbol.

In time resources operating with SB-FD, some frequency resources are used as DL resources and some frequency resources are used as UL resources. Between DL and UL frequency resources, there may be a guard sub-band (or guard frequency resource or guard subcarrier(s)) that is not used in both DL and UL and becomes empty. In time resources operating with SF-FD, all frequency resources can be used for both DL and UL. Alternatively, some frequency resources at one or both ends of the carrier may not be used for DL and/or UL to reduce the effect of interference (i.e., adjacent carrier interference (ACI)) from other adjacent carriers. That is, one or both ends of the carrier may be used as a guard band that is not used for both DL and UL. Alternatively, to reduce ACI affecting UL reception, one or both ends of the carrier may be used only for DL transmission.

In this specification, a frequency resource operating in DL among all frequency resources in time resources operating in FD is referred to as a DL sub-band, and a frequency resource operating in UL is also referred to as a UL sub-band.

In the case of the full duplex operation as described above, the full duplex operation can be performed both in terms of the gNB and the UE. That is, both the gNB and the UE can simultaneously perform transmission and reception of DL and UL using the same or different frequency resources in the same time resource. On the other hand, only the gNB performs full-duplex operation, and the UE can perform half-duplex operation. The gNB can transmit/receive DL and UL at the same time using the same or different frequency resources in the same time resource, but the UE performs only DL reception or UL transmission in a specific time resource. In this case, the gNB performs full duplex operation by performing DL transmission and UL reception with different UEs at the same time.

The content of this specification is generally described on the assumption that a gNB performs a full-duplex operation, but a UE performs a half-duplex operation. However, the content of this specification can be applied even when both the gNB and the UE perform full duplex operation.

Based on this discussion, the present specification proposes a time resource constituting repeated transmission when performing repeated transmission for coverage enhancement of a UE.

PUSCH repetition type A and type B are introduced in NR Rel-15/16, and transmission is performed as follows according to the PUSCH repetition type.

- PUSCH repetition type A

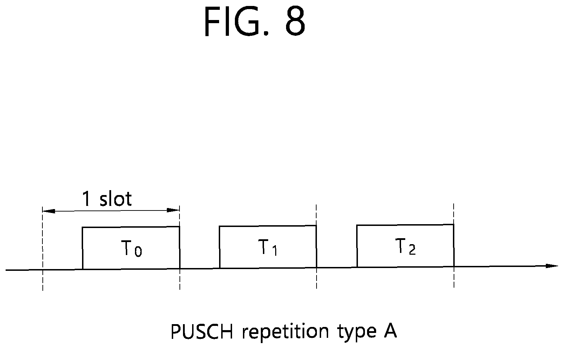

FIG. 8 schematically illustrates an example of PUSCH repetition type A.

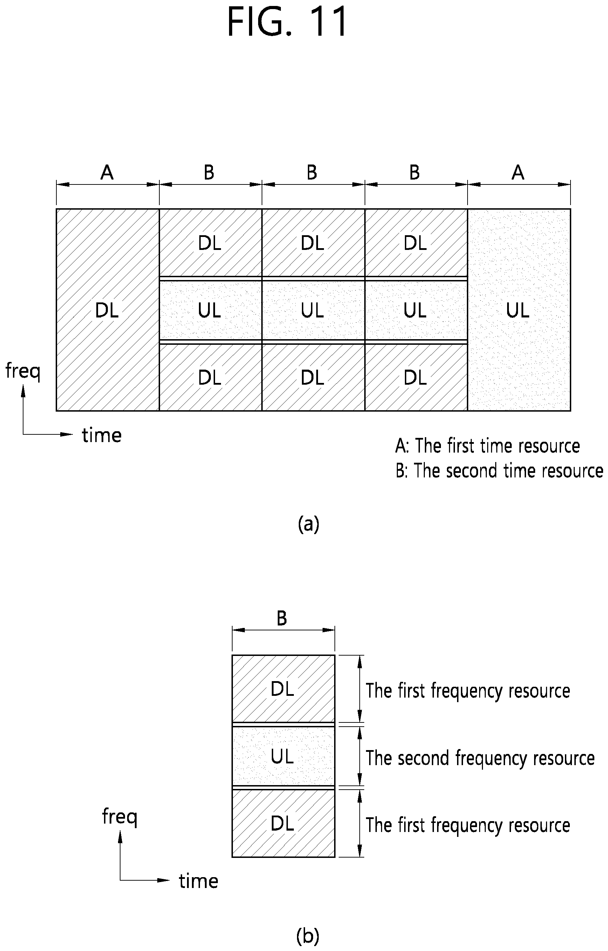

PUSCH repetition type A is slot-based repetition, and as shown in FIG. 11, repetition is performed with the same PUSCH transmission start symbol position and PUSCH transmission symbol length for each slot. At this time, if there is an invalid symbol that cannot be used for PUSCH transmission among symbol resources constituting a specific PUSCH repetition, transmission of the corresponding PUSCH repetition is dropped and is not performed. That is, when a total of four PUSCH repetition transmissions of Rep0, Rep1, Rep2, and Rep3 are performed, if an invalid symbol is included in the symbol resources constituting Rep1, the transmission of Rep1 is dropped, and only transmissions of Rep0, Rep2, and Rep3 are performed. Accordingly, the number of actually performed repetitions may be smaller than the configured number of repetitions.

For PUSCH repetition type A, the UE is configured for frequency hopping by higher layer parameters.

One of two frequency hopping modes can be configured.

    i) Intra-slot frequency hopping applicable to single-slot and multi-slot PUSCH transmissions.

    ii) Inter-slot frequency hopping applicable to multi-slot PUSCH transmission.

- PUSCH repetition type B

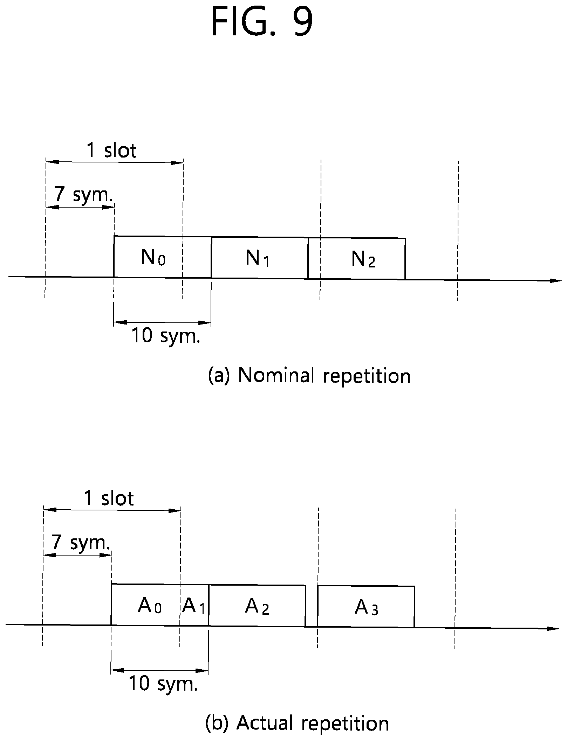

FIG. 9 schematically illustrates an example of PUSCH repetition type B.

In PUSCH repetition type B, repetition is performed in units of symbol lengths in which an actual PUSCH is transmitted. That is, when the PUSCH is transmitted in 10 symbols as in (a) of FIG. 9, PUSCH repetition is performed in units of 10 consecutive symbols. Repetition where PUSCH repetition transmission time resources are determined without considering slot boundaries, invalid symbols, etc. is referred to as nominal repetition. However, in the case of actual PUSCH repetition, one PUSCH cannot be transmitted on a slot boundary. When the PUSCH transmission includes a slot boundary, two actual repetitions are performed across the slot boundary as shown in FIG. 9(b). Also, one PUSCH transmission can be performed only through consecutive symbols. When an invalid symbol exists in a time resource in which a PUSCH repetition is to be transmitted, actual repetitions are constructed using consecutive symbols bounded by invalid symbols. For example, if symbols #0 to #9 constitute one nominal repetition and symbols #3 to #5 are invalid symbols, symbols #0 to #2 and symbols #6 to #9 excluding the invalid symbols each constitute one actual repetition.

If a symbol that cannot be used for PUSCH transmission (e.g., a DL symbol indicated by DCI format 2_0) is included in one actual repetition resource, the corresponding actual repetition transmission is dropped and is not performed.

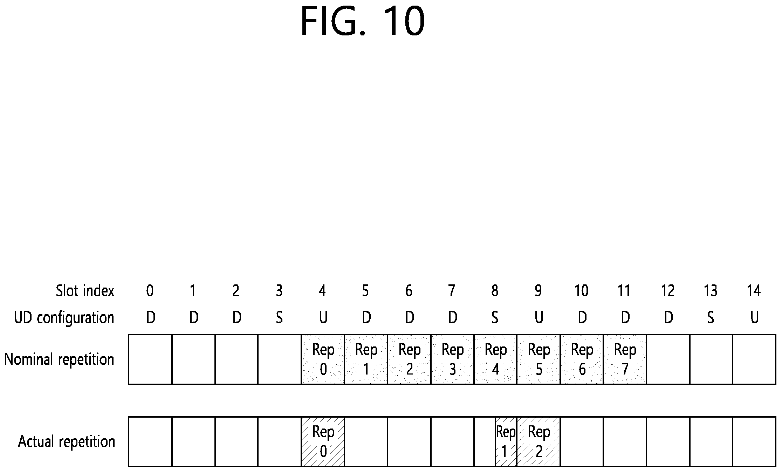

FIG. 10 shows a comparison between the nominal repetition and the actual repetition, according to an example.

In the case of PUSCH repetition as described above, a problem arises in that resources used for actual PUSCH transmission are limited in an environment such as a TDD configuration with a low ratio of uplink resources. For example, TDD configuration for a period of 10 slots may be equal to DDDSUDDDSU in units of slots. In this case, D and U mean a slot in which all resources in the slot are composed of downlink and uplink, respectively, and S means a slot in which symbols in the slot are composed of downlink, flexible, and/or uplink. In this case, when PUSCH repetition type A is applied and 8 PUSCH repetitions are performed from slot # 4, 2 PUSCH repetitions can be actually transmitted through uplink slots slot #4 and slot #9 among slots #4 to slot #11. Alternatively, when PUSCH repetition type B is applied, PUSCH is transmitted from symbol #0 of slot #4 as shown in FIG. 10, and one PUSCH may consist of 14 symbols (= 1 slot). At this time, unlike the nominal repetition, which is configured using the resources of slot #4 to slot #11, the actual transmission uses the resources of slot #4, slot #8, and slot #9 for three actual transmissions and is performed. In this case, in the case of actual repetition #1 transmitted in slot #8, it may be performed using fewer than 14 symbols excluding DL symbols.

In the case of PUSCH repetition as described above, only a significantly smaller number of repetitions than the number of repetitions configured by the gNB can actually be performed, resulting in a situation in which the gNB cannot obtain intended performance. In this case, although the gNB may set the number of repetitions in consideration of invalid resources of the UE, currently, the maximum number of repetitions that can be set is limited to 16, and if there are too many types of repetitions that can be set, the overhead for indicating the number of repetitions may increase.

For PUSCH repetition type B, the UE is configured for frequency hopping by higher layer parameters.

The frequency hopping mode for type 2 configured PUSCH transmission follows the configuration of the active DCI format. One of two frequency hopping modes can be configured.

    i) Frequency hopping between repetitions.

    ii) Frequency hopping between slots.

When performing DL and UL operations simultaneously in the same time resource using SB-FD, to reduce self-interference (SI) and cross-link interference (CLI) from other DL sub-bands of the same carrier to UL sub-bands, guard sub-bands may be placed between the DL sub-bands and the UL sub-bands. When DL and UL operations are simultaneously performed in the same time resource using SS-FD, a guard sub-band may be placed at an edge portion of a carrier in order to reduce ACI from an adjacent carrier.

In this specification, it is assumed that a cell (gNB) performs both DL transmission and UL reception in the same time resource according to an FD scheme such as SB-FD or SS-FD. More specifically, it is assumed that an HD operation is performed in a first time resource and an FD operation is performed in a second time resource (which may be time resources other than the first time resource).

In the first time resource for performing the HD operation, the DL operation or the UL operation is performed in all frequency resources constituting the entire system bandwidth. Within the first time resource performing the HD operation, the network performs a DL operation through the 1-1 st time resource and a UL operation through the 1-2th time resource. In this case, the 1-1 st time resource and the 1-2th time resource do not overlap each other.

With respect to the second time resource for performing the FD operation, the network performs the DL operation through all or some frequency resources (first frequency resource) among the frequency resources constituting the system bandwidth of the cell, and all or some frequency resources (second frequency resource) frequency resource) to perform UL operation.

FIG. 11 schematically illustrates an example of a first time resource and a second time resource.

For example, as shown in (a) of FIG. 11, the marked time resource operating in HD corresponds to the first time resource, and the time resource operating in SB-FD corresponds to the second time resource. And, for the first time resource, the time resource indicated by DL corresponds to the 1-1st time resource, and the time resource indicated by UL corresponds to the 1-2th time resource. As shown in (b) of FIG. 11, the frequency resource operating in DL for the second time resource corresponds to the first frequency resource, and the frequency resource operating in UL corresponds to the second frequency resource.

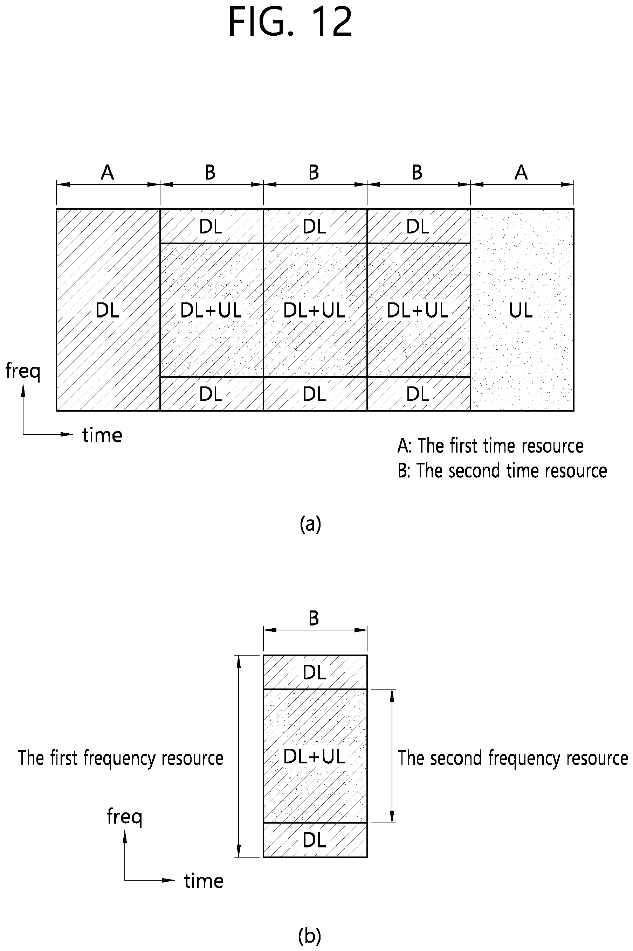

FIG. 12 schematically illustrates another example of a first time resource and a second time resource.

For another example, as shown in (a) of FIG. 12, the marked time resource operating in HD corresponds to the first time resource, and the time resource operating in SS-FD corresponds to the second time resource. And, for the first time resource, the time resource indicated by DL corresponds to the 1-1st time resource, and the time resource indicated by UL corresponds to the 1-2th time resource. As shown in (b) of FIG. 12, for the second time resource, the frequency resource operating in DL corresponds to the first frequency resource, and the frequency resource operating in UL corresponds to the second frequency resource. The frequency resources indicated as DL+UI, are frequency resources capable of both DL and UL operations, and correspond to both the first frequency resource and the second frequency resource.

More specifically, the first frequency resource and/or the second frequency resource may have all or part of the following characteristics.

- When performing the SB-FD operation, the first frequency resource and the second frequency resource do not overlap each other. This is to ensure that DL and UL resources are performed through different frequency resources. In this case, a frequency resource that does not correspond to both the first frequency resource and the second frequency resource may exist, and this frequency resource is referred to as a guard sub-band or a guard frequency resource. This guard frequency resource may be needed to reduce interference from DL transmission to UL reception. This guard frequency resource may be located between the first frequency resource and the second frequency resource.
- In the case of performing the SS-FD operation, the first frequency resource and the second frequency resource may overlap. In this case, a frequency resource that does not correspond to both the first frequency resource and the second frequency resource may exist, and this frequency resource is referred to as a guard sub-band or a guard frequency resource. This guard frequency resource may be needed to reduce interference from DL transmissions on adjacent carriers to UL reception and/or to reduce interference from DL transmissions to UL reception on adjacent carriers.
- In the case of performing the SB-FD operation, the second frequency resource may be composed of continuous frequency resources, and the first frequency resource may be composed of non- continuous frequency resources. In this case, the first frequency resource may be composed of a plurality of (e.g., two) sets of continuous frequency resources. This is to reduce interference caused by DL transmission in an adjacent carrier to UL resources by locating the second frequency resource used for UL at the center of the frequency resources constituting the cell. Conversely, the first frequency resource may be composed of continuous frequency resources, and the second frequency resource may be composed of non-continuous frequency resources. In this case, the second frequency resource may be composed of a plurality of (e.g., two) sets of continuous frequency resources. This is to reduce interference caused by DL transmission to UL resources in adjacent carriers by locating the second frequency resource used for DL at the center of the frequency resources constituting the cell.
- In the case of performing SS-FD operation, the second frequency resource may be composed of some frequency resources of the first frequency resource. At this time, the second frequency resource may be configured as less as each X PRBs for one or both edge portions than the first frequency resource. This is to reduce interference caused by DL transmission on adjacent carriers to UL reception. This may be interpreted as that the guard frequency resource is applied only to the second frequency resource and not to the first frequency resource.

Compared to the existing TDD environment, in these SB-FD and SS-FD environments, the UE may have more opportunities to perform uplink transmission. In addition, uplink transmission may be performed through resources adjacent to each other on the time axis. Therefore, it is advantageous for transmission using repetition of PUSCH and PUCCH. Therefore, SB-FD and SS-FD environments may have advantages in terms of uplink coverage expansion.

In the present specification, considering FD environments such as SB-FD and SS-FD, a method of determining a time resource of PUSCH repetition suitable for coverage extension and performing PUSCH repetition is proposed.

The contents of this specification are described from the viewpoint of transmission of PUSCH, but the contents of this specification include transmission of other channels such as PUCCH, PDSCH, and PDCCH as well as PUSCH.

Additional advantages, objects and features of the present disclosure will be set forth in part from the following description and will become apparent to those skilled in the art in part from a review of the following or may be learned from practice of the present specification. The objectives and other advantages of this specification may be realized and attained by the structure particularly pointed out in the description and claims set forth herein, as well as in the accompanying drawings.

The configuration, operation and other features of this specification will be understood by the embodiments of this specification described with reference to the accompanying drawings.

A. Symbol resources for actual repetition.

(a) Actual repetition across slot boundaries.

In the case of the current PUSCH repetition type B, when symbol resources constituting a nominal repetition include a slot boundary, repetition resources are divided along the slot boundary. One nominal repetition resource may be divided into two actual repetitions across a slot boundary.

In this case, since the amount of resources constituting one actual repetition is small, each repetition may not be able to obtain a sufficient code rate. Therefore, coded bits to be transmitted may not be evenly repeated.

For coverage extension in NR, it may be considered to obtain an energy combining gain by using the same RE mapping between repetitions as in Rel-13 LTE eMTC. In this case, the same coded bit may be transmitted by applying the same RV value between repetitions. In this case, if the amount of resources constituting one actual repetition is further reduced so that each repetition cannot obtain a sufficient code rate, the coded bits to be transmitted may not be evenly repeated.

For this purpose, actual repetition resources need to be configured including slot boundaries.

To solve this problem, actual repetition resources need to be configured including slot boundaries. That is, symbol resources constituting actual repetition may be configured using consecutive symbols regardless of slot boundaries.

(b) Actual repetition including invalid symbol(s).

In the case of the current PUSCH repetition type B, when an invalid symbol is included in symbol resources constituting a nominal repetition, actual repetition resources are divided on the boundary of consecutive invalid symbol(s). In this case, since the amount of resources constituting one actual repetition is small, each repetition may not be able to obtain a sufficient code rate. As a result, as mentioned in (a) above, a problem in that coded bits to be transmitted may not be evenly transmitted may occur.

In order to solve this problem, it is necessary to ensure that actual repetitions are not segmented in invalid symbols. That is, one actual repetition may be configured using contiguous symbol resources regardless of whether symbols are valid/invalid.

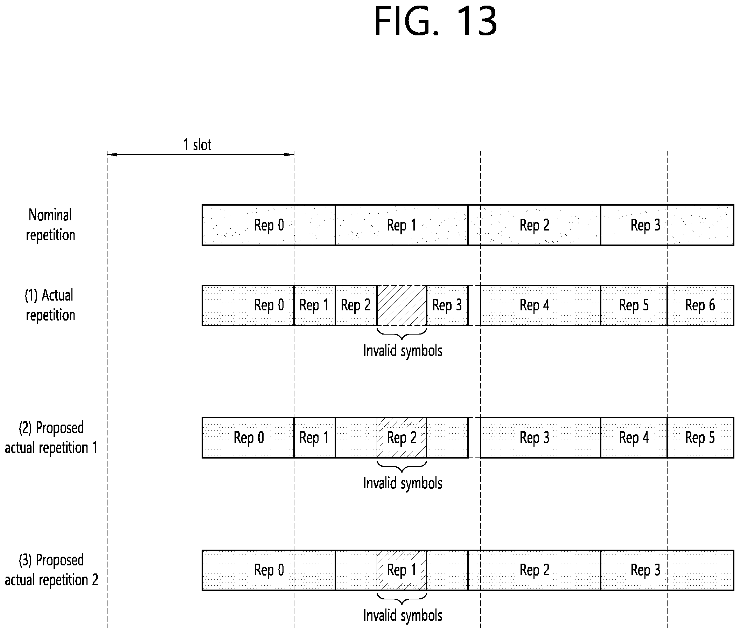

FIG. 13 schematically illustrates an embodiment of repetitive transmission.

Based on the current PUSCH repetition type B scheme, considering slot boundaries and invalid symbols, when a nominal repetition boundary in FIG. 13 is configured, actual repetition may be configured as shown in (1) of FIG. 13.

At this time, when the proposal in (b) is applied, actual repetition may be configured as shown in (2) of FIG. 13. In the case of actual repetition (i.e., Rep 2) No. 2, despite the presence of an invalid symbol, repetition resources are composed of consecutive symbols including the corresponding symbol. However, when a slot boundary exists, one actual repetition is constructed using only consecutive symbols within the same slot.

On the other hand, when both the proposal in (a) and the proposal in (b) are applied, actual repetition can be configured as shown in (3) of FIG. 13. One actual repetition is constructed using consecutive symbols, even if they are located in different slots. In the case of actual repetition (i.e., Rep 1) No. 1, despite the presence of an invalid symbol, a repetition resource is composed of consecutive symbols including the corresponding symbol.

(c) Frequency resource(s) at each actual repetition.

In the time domain, in the case of conventional PUSCH repetition type B, when symbol resources constituting nominal repetition include a slot boundary, repetition resources are divided across the slot boundary. That is, one nominal repetition resource may be divided into two actual repetitions across a slot boundary. In addition, when an invalid symbol exists in a time resource on which a PUSCH repetition is to be transmitted, it can be divided into two actual repetitions with the invalid symbol as a boundary.

The existing rules in the time domain may be maintained, but the total resource amount (e.g., the total number of REs) of each actual repetition resource may be configured to be the same. For example, in the time domain, if symbols #0 to #9 constitute one nominal repetition and symbols #3 to #5 are invalid symbols, symbols #0 to #2 and symbols #6 to #9, excluding invalid symbols, constitute one actual repetition. At this time, when actual repetition resources composed of symbols #0 to #2 include 4N REs in the frequency domain, an actual repetition resource composed of symbols #6 to #9 may include 3N REs in the frequency domain. As a result, the resource amount of each actual repetition resource can be configured to be the same. The amount of frequency resources in each actual repetition resource may be given as a value dependent on the amount of time domain resources.

Alternatively, while maintaining the existing rule in the time domain, the total resource amount of each actual repetition resource may be set independently.

What is described in (c) may be applied separately or in combination with (a) and (b) described above.

B. PUSCH repetition count considering invalid symbol(s)

In this section, when the number of symbol resources constituting one actual repetition is less than or equal to a specific number, or when the number of symbols excluding invalid symbols among the symbol resources constituting one actual repetition is less than or equal to a specific number, a method for performing PUSCH repetition is proposed. Specifically, it is proposed to perform transmission as follows.

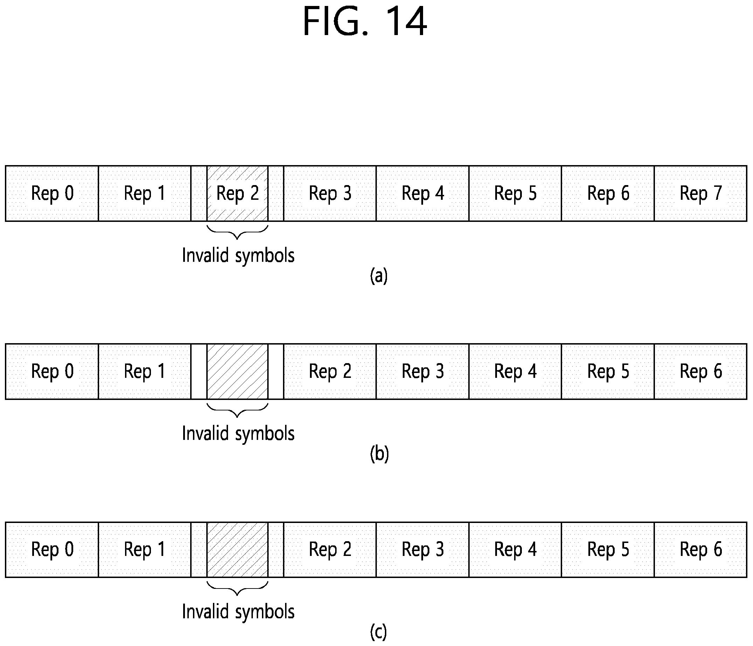

FIG. 14 schematically illustrates an example of a method of performing PUSCH repetition according to the number of symbol resources.

- Proposal (a): Regardless of the number of symbol resources constituting actual repetition or the number of symbols not included in invalid symbols in symbol resources of actual repetition, PUSCH transmission is performed through available resources in actual repetition, and the corresponding actual repetition may be included in the repetition count. In this case, even if there is no symbol resource available for PUSCH transmission within an actual repetition, the corresponding actual repetition may be included in the repetition count. For example, as in (a) of FIG. 14, even if an invalid symbol is included in the symbol resource constituting the second actual repetition, PUSCH transmission is performed using available resources in corresponding actual repetition resources, and a corresponding actual repetition may be included in the repetition count.
- Proposal (b): When the number of symbol resources constituting actual repetition is N or less, or when the number of symbols not included in invalid symbols in symbol resources of actual repetition is N or less, transmission in the corresponding actual repetition resource may not be performed and may not be included in the repetition count (repetition can be postpone). For example, as shown in (b) of FIG. 14, when the number of symbols not included in invalid symbols in symbol resources constituting the second actual repetition is N or less, it is determined whether actual PUSCH repetition can be performed on the next actual repetition resource without performing transmission on the corresponding actual repetition resource. In the case of the next actual repetition, since invalid symbols are not included in the symbol resources constituting the actual repetition, PUSCH repetition transmission may be performed and the corresponding actual repetition resource is counted as the second actual repetition.
During this time, it may be expressed as follows. The $n^{th}$ PUSCH repetition is performed through the nearest valid symbol bundle from a symbol next to the symbol in which the $n-1^{th}$ PUSCH repetition ends. At this time, the symbol bundle is composed of L consecutive symbols from the symbol next to the symbol at which the $n-1^{th}$ PUSCH repetition ends, and if the number of symbols not included in invalid symbols in a specific symbol bundle is N or less, it is determined that the corresponding symbol bundle is valid.
- Proposal (c): When the number of symbol resources constituting actual repetition is N or less, or when the number of symbols not included in invalid symbols in symbol resources of actual repetition is N or less, PUSCH transmission is performed using available symbol resources within symbol resources constituting actual repetition. However, transmission in the corresponding resource may not be included in the repetition count. For example, as shown in (c) of FIG. 14, when the number of symbols not included in invalid symbols in symbol resources constituting the second actual repetition is N or less, PUSCH transmission is performed using resources available in the corresponding actual repetition resource, but the transmission is not used in the repetition count and the next actual repetition counts as the second actual repetition. For that actual repetition, it may be included as part of a previous or later repetition, or treated as an additional repetition not included in a specific repetition number.

At this time, the value of N mentioned above may be determined as follows.

- Alt 1. The value of N can be fixed to a specific value (e.g., N=1).
- Alt 2. The value of N can be configured from gNB by RRC/DCI, etc.
- Alt 3. The value of N may be the same as the value corresponding to the floor (L/M) when L is the symbol length of PUSCH transmission (i.e., symbol length of one PUSCH repetition based on nominal repetition). At this time, the value of M may be fixed to a specific value (e.g., M = 3) or configured from the gNB by RRC/DCI.

Characteristically, when determining the number of symbols excluding invalid symbols among symbol resources constituting actual repetition, determination may be performed in consideration of only cell-specific invalid symbols excluding UE-specific invalid symbols. That is, when symbol resources excluding cell-specific invalid symbols among symbol resources constituting actual repetition are N or less, the contents of the proposal (b) or proposal (c) can be applied. This is to make the same understanding/determination of invalid symbols between different UEs so that repetition counts can be made on the same basis.

This proposal can also be applied to slot-based repetition such as PUSCH repetition type A. In the case of the current PUSCH repetition type A, if an invalid symbol is included in a symbol resource in which a PUSCH is transmitted through repetition, the corresponding PUSCH repetition is not performed and dropped. However, in the present specification, even when an invalid symbol is included in symbol resources in which PUSCH is transmitted, it is proposed to perform PUSCH repetition using available symbol resources without dropping the corresponding transmission. At this time, if the number of symbol resources available for PUSCH repetition is N or less, (a) performing PUSCH repetition transmission with available resources and including them in the repetition count, or (b) PUSCH repetition transmission is not performed in the corresponding slot and is not included in the repetition count (i.e., repetition is postponed), or (c) PUSCH repetition transmission is performed with resources available in the corresponding slot, but may not be included in the repetition count.

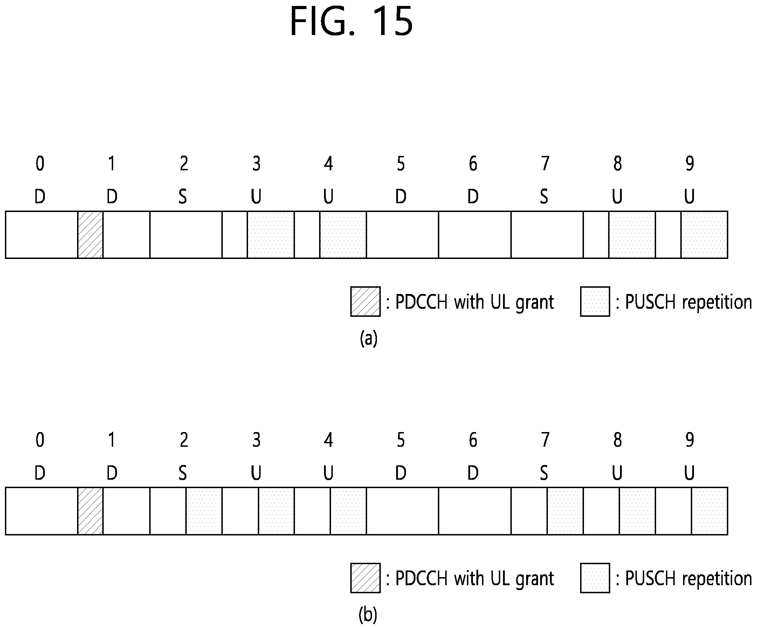

FIG. 15 schematically illustrates an example of PUSCH repetition transmission resources.

When PUSCH repetition is performed using PUSCH repetition type A, PUSCH repetition is performed using the same symbol resource for each slot. Examples of PUSCH repetition resources are shown in (a) and (b) of FIG. 15. In FIG. 15, D denotes a slot composed of downlink symbols, U denotes a slot composed of uplink symbols, and S denotes a slot composed of a mixture of downlink, flexible, and/or uplink symbols. In this case, when a UL grant is transmitted in slot 1, (a) and (b) of FIG. 15 show PUSCH transmission when PUSCH repetition transmission is configured in slot 3 and slot 2, respectively. In (a) of FIG. 15, a case in which PUSCH is repeated using N symbols per slot from slot 3 is shown. Since slots 5 and 6 consist of only downlink symbols, PUSCH repetition is not performed. In slot 7, PUSCH transmission is not performed because there are fewer than N slots available for PUSCH transmission. In (b) of FIG. 15, the PUSCH is repeated using M symbols per slot starting from slot 2. PUSCH is transmitted using some symbols of slots 2 and 7, and slots 3, 4, 8 and 9 are entirely composed of uplink symbols, since the PUSCH is repeated using the same symbol resource for each slot, it shows that the PUSCH is transmitted using only some symbols.

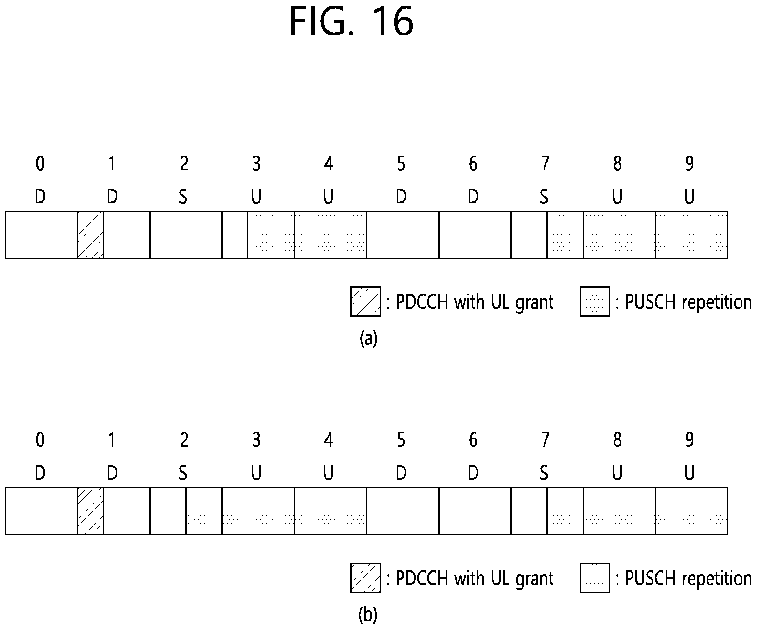

FIG. 16 schematically illustrates an example of using uplink resources not used for PUSCH transmission for PUSCH transmission.

In this case, more efficient transmission can be performed if uplink resources not used for PUSCH transmission can be used for PUSCH transmission. For example, as shown in (a) of FIG. 16, when PUSCH repetition transmission is scheduled from a specific symbol of slot 3, if the PUSCH is transmitted using all available uplink resources after the corresponding symbol, more efficient PUSCH transmission can be performed. In addition, as shown in (b) of FIG. 16, when PUSCH repetition transmission is scheduled from a specific symbol of slot 2, if the PUSCH is transmitted using all available uplink resources after the corresponding symbol, more efficient PUSCH transmission can be performed.

That is, when slot-based PUSCH repetition is performed for this purpose, symbol resources constituting each PUSCH repetition may be determined as all symbol resources within a slot. In this case, the following symbols may be determined as symbols that cannot be used for PUSCH transmission.

- In the case of the first PUSCH repetition, a region from the first symbol in the slot to the previous symbol of the start symbol of PUSCH transmission indicated by the UL grant may be determined as a symbol that cannot be used for PUSCH transmission.
- Symbols that cannot be used for PUSCH transmission other than downlink symbols may be determined as symbols that cannot be used for PUSCH transmission.

When PUSCH repetition is performed in this way, as shown in FIG. 15, the symbol length through which actual PUSCH is transmitted may vary for each PUSCH repetition. In this case, when determining the number and location of DMRS symbols based on the length of a resource where actual PUSCH repetition is performed for each slot, the number and location of DMRS symbols may be different for each slot.

In this case, it is difficult to perform RE level combining by performing the same PUSCH RE mapping for each repetition (for each slot).

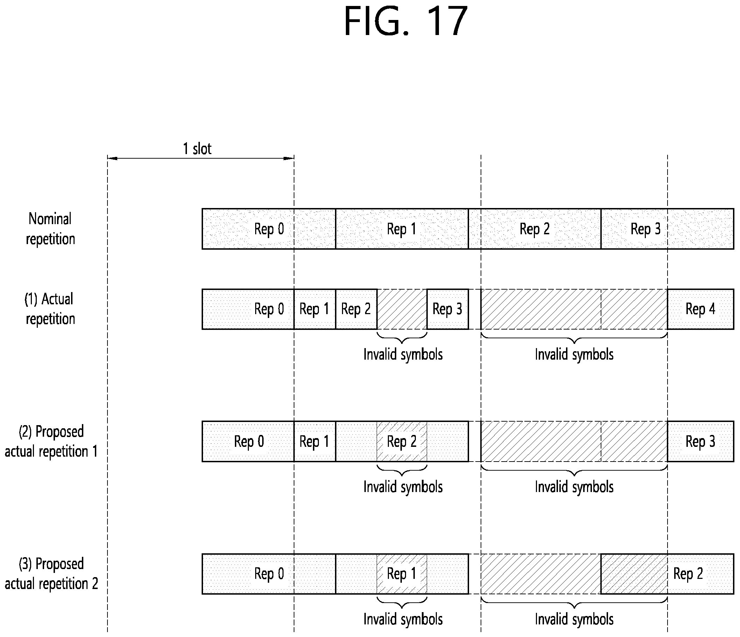

FIG. 17 schematically illustrates another example in which the foregoing proposal is reflected.

Unlike the existing method of determining actual repetition resources as in (a) of FIG. 17, actual repetition is configured including an invalid symbol in (b) of FIG. 17. However, as before, actual repetition is separated at the slot boundary. At this time, if the number of symbols excluding invalid symbols among the symbols constituting the actual repetition is greater than N, the resource is determined as an actual repetition resource. And, among symbols constituting actual repetition, when the number of symbols excluding invalid symbols is N or less, the corresponding resource may not be used for actual repetition. Therefore, in (b) of FIG. 17, the number of symbols excluding invalid symbols in the resource corresponding to the nominal repetition 1 is greater than N, so that the corresponding resource used as the actual repetition 2. And, in the case of a resource corresponding to nominal repetition 2, the number of symbols excluding invalid symbols is N or less, so the resource is not used for actual repetition.

In (c) of FIG. 17, actual repetition is configured by including an invalid symbol, and actual repetition is not separated by a slot boundary. At this time, if the number of symbols excluding invalid symbols among the symbols constituting the actual repetition is greater than N, the resource is determined as an actual repetition resource. And, among symbols constituting actual repetition, when the number of symbols excluding invalid symbols is N or less, the corresponding resource may not be used for actual repetition. Therefore, in (c) of FIG. 17, since the number of symbols excluding invalid symbols in the resource corresponding to nominal repetition 1 is greater than N, the corresponding resource is used as actual repetition 1. In the case of a resource corresponding to nominal repetition 2, the number of symbols excluding invalid symbols is N or less, so the resource is not used for actual repetition, and the repetition count is not performed. In the case of a resource corresponding to nominal repetition 3, the number of symbols excluding invalid symbols is greater than N, so it is used for actual repetition, and the corresponding actual repetition becomes the actual repetition 2.

At this time, PUSCH repetition may be performed until the count of the actual number of repetitions reaches the configured number of repetitions. In the case of PUSCH repetition type A (slot-based repetition), it may be performed until the count of PUSCH repetitions reaches the configured number of repetitions.

That is, if R number of PUSCH repetitions are configured, according to the above proposal (b) or (c), when the number of symbols available for PUSCH transmission is less than a specific number, the UE does not perform an actual repetition count, and an actual repetition count is performed only when the number of symbols available for PUSCH transmission is greater than a specific number.

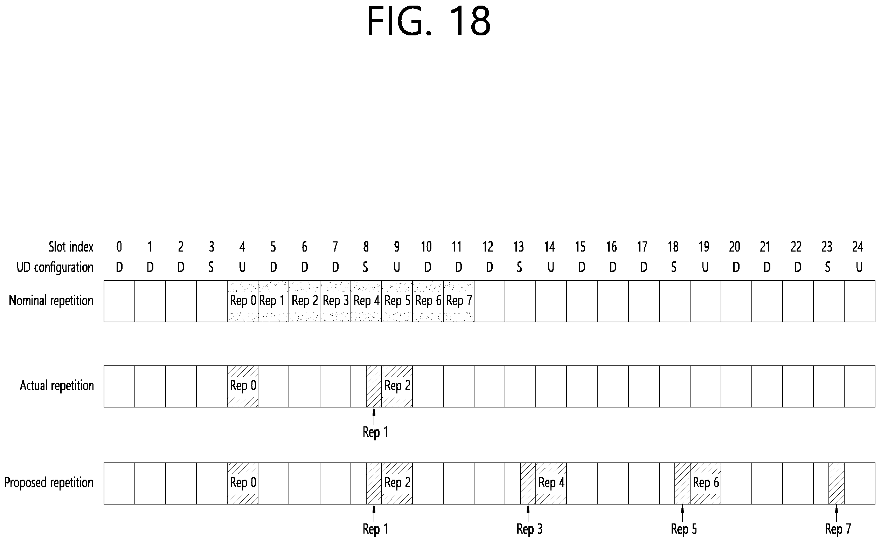

FIG. 18 schematically illustrates an example of TDD configuration and PUSCH repetition at this time.

As in the example of FIG. 18, the TDD configuration for a period of 10 slots may be equal to DDDSUDDDSU in units of slots. In this case, D and U mean a slot in which all resources in the slot are composed of downlink and uplink, respectively, and S means a slot in which symbols in the slot are composed of downlink, flexible, and/or uplink. In this case, when it is necessary to perform 8 PUSCH repetitions in units of 14 symbols from slot # 4, according to the existing PUSCH repetition type B scheme, actual repetition can be performed only in slots #4, #8, and #9. However, according to the proposal of this specification, if the number of symbols available for PUSCH transmission is less than a certain number, it is not included in the repetition count, so as in the proposed repetition of FIG. 18, using 8 slot resources, a total 8 PUSCH repetitions may be performed.

C. RE mapping in repetition

As in the proposals in Sections A and B above, if the actual repetition consists of an invalid symbol, there may be symbols that cannot be used for data transmission in actual repetition. The symbols that cannot be used for such data transmission may include the following symbols.

- Invalid symbol (s) defined in PUSCH repetition type B. A specific example of this is expressed as a table as follows.

[Table 4]

| For PUSCH repetition Type B, the UE determines invalid symbols) as follows: |
| --- |
| ∘ A symbol indicated as downlink by *tdd-UL-DL-ConfigurationCommon* or *tdd-UL-DL-ConfigurationDedicated* <br><br> ∘ symbols indicated by higher layer parameter *InvalidSymbolPattern* and invalid symbol pattern indicator <br> ∘ For operation in unpaired spectrum, <br><br> ▪ symbols indicated by *ssb-PositionsInBurst* in SIB1 or *ssb-PositionsInBurst* in ServingCellConfigCommon for reception of SS/PSCH blocks <br><br> ▪ symbol(s) indicated by pdcch-ConfigSIS1 in MIB for a CORESET for Type0-PDCCH CSS set <br><br> ▪ if *numberInvalidSymbolsForDL-UL-Switching* is configured, *numberInvalidSymbolsForDL-UL-Switching* symbol(s) after the last symbol that is indicated as downlink in each consecutive set of all symbols that are indicated as downlink by *tdd-UL-DL-ConfigurationCommon* or *tdd-UL-DL-ConfigurationDedicated* |

- Symbol (s) that other UEs cannot transmit PUSCH

E.g., DL resources dynamically indicated by DCI format 2_0

In the case of PUSCH repetition type A, resources on which repetition is to be performed may include symbols that cannot be used for PUSCH transmission, in this case, transmission of the corresponding PUSCH repetition is not performed.

In order to make maximum use of UL resources, it is necessary to transmit PUSCH even if invalid symbols are included in PUSCH repetition resources (actual repetition resources). In this case, RE mapping may be performed by considering an invalid symbol as follows.

For coverage extension in NR, it may be considered to obtain an energy coupling gain by using the same RE mapping between repetitions as in Rel-13 LTE eMTC. To achieve the same RE mapping between PUSCH repetitions, if a symbol/RE resource that cannot be used for PUSCH transmission is included in a PUSCH repetition symbol resource, PUSCH transmission may be punctured in the corresponding resource. At this time, the DMRS transmission symbol is not included in the symbol/RE resource that cannot be used for PUSCH transmission. In the DMRS transmission symbol, PUSCH transmission can be performed by rate-matching as in the conventional case.

In the examples of (a) and (b) of FIG. 18, when PUSCH repetition starts in slot 3 and slot 2, respectively, downlink slots 5 and 6 are all symbols that cannot be used for PUSCH transmission. In the case of slot 7, a symbol configured for downlink may be a symbol that cannot be used for PUSCH transmission. In the start slot of the PUSCH repetition, previous symbols of a symbol in which PUSCH transmission starts indicated by the UL grant may become symbols that cannot be used for PUSCH transmission. In symbol resources that cannot be used for such PUSCH transmission, PUSCH transmission may be punctured to achieve the same RE mapping between PUSCH repetitions.

D. Available slot resources for PUSCH repetition(s)

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

The following embodiments may operate together with the previously described embodiments of the present specification (unless configurations are contradictory to each other). In addition, the following embodiments may operate independently of the previously described embodiments of the present specification.

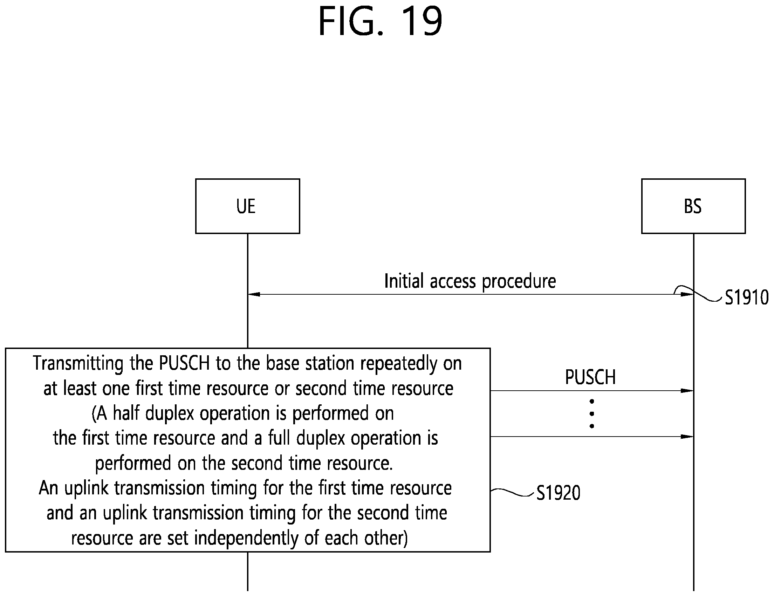

FIG. 19 is a flowchart of a method of repeatedly transmitting a PUSCH according to an embodiment of the present specification.

According to FIG. 19, a UE may perform an initial access procedure with a base station (S1910). Since a more specific embodiment of this is the same as described above (and will be described later), repeated description of redundant content will be omitted for convenience of explanation.

The UE may repeatedly transmit the PUSCH to the base station on at least one first time resource or second time resource (S1920). Here, a half duplex operation may be performed on the first time resource, and a full duplex operation may be performed on the second time resource. In addition, uplink transmission timing for the first time resource and uplink transmission timing for the second time resource may be set independently of each other. Since a more specific embodiment of this is the same as described above (and will be described later), repeated description of redundant content will be omitted for convenience of explanation.

For example, the UE may repeatedly transmit the PUSCH only on the first time resource or repeatedly transmit the PUSCH only on the second time resource. Since a more specific embodiment of this is the same as described above (and will be described later), repeated description of redundant content will be omitted for convenience of explanation.

Here, for example, based on the fact that the resource for repeatedly transmitting the PUSCH is the first time resource, the UE determines that at least one slot corresponding to the second time resource is an unavailable slot, and the UE determines at least one slot among slots corresponding to the first time resource as at least one available slot, and the UE may repeatedly transmit the PUSCH on the at least one available slot. Since a more specific embodiment of this is the same as described above (and will be described later), repeated description of redundant content will be omitted for convenience of explanation.

Here, for example, based on the fact that the resource for repeatedly transmitting the PUSCH is the second time resource, the UE determines that at least one slot corresponding to the first time resource is an unavailable slot, and the UE determines at least one slot among slots corresponding to the second time resource as at least one available slot, and the UE may repeatedly transmit the PUSCH on the at least one available slot. Since a more specific embodiment of this is the same as described above (and will be described later), repeated description of redundant content will be omitted for convenience of description.

Here, for example, based on the fact that the first slot for repeatedly transmitting the PUSCH is the first time resource, the UE may repeatedly transmit the PUSCH only on the first time resource. Since a more specific embodiment of this is the same as described above (and will be described later), repeated description of redundant content will be omitted for convenience of description.

Here, for example, based on the fact that the first slot for repeatedly transmitting the PUSCH is the second time resource, the UE can repeatedly transmit the PUSCH only on the second time resource. Since a more specific embodiment of this is the same as described above (and will be described later), repeated description of redundant content will be omitted for convenience of description.

Here, for example, the UE may be configured to repeatedly transmit the PUSCH only in the first time resource or in the second time resource, based on a radio resource control (RRC) message or downlink control information (DCI) from the base station. Since a more specific embodiment of this is the same as described above (and will be described later), repeated description of redundant content will be omitted for convenience of description.

Here, for example, uplink transmission timing for the first time resource and uplink transmission timing for the second time resource may be different from each other. Since a more specific embodiment of this is the same as described above (and will be described later), repeated description of redundant content will be omitted for convenience of description.

For example, the second time resource may include a first frequency resource and a second frequency resource in terms of frequency, an uplink operation may be performed on the first frequency resource, and a downlink operation may be performed on the second frequency resource. Since a more specific embodiment of this is the same as described above (and will be described later), repeated description of redundant content will be omitted for convenience of description.

For example, the UE may repeatedly transmit the PUSCH using both the first time resource and the second time resource. Since a more specific embodiment of this is the same as described above (and will be described later), repeated description of redundant content will be omitted for convenience of description.

Meanwhile, the above-described example may be applied to PUSCH repetition type A and/or PUSCH repetition type B. That is, in the description below, an example for PUSCH repetition type A is mainly described, but unless a combination or substitution of configurations is impossible, the embodiment for PUSCH repetition type A in the present specification may also be applied to PUSCH repetition type B.

Hereinafter, the example described above will be described in more detail.

Considering that the cell uses FD operations such as SB-FD and SS-FD, it is possible to perform HD operation in the first time resource and FD operation in the second time resource. In this case, the time resource in which the UE performs uplink transmission may be a first time resource in which the gNB performs a half-duplex operation or a second time resource in which the gNB performs a full-duplex operation.

In this case, in the first time resource in which the gNB performs the half-duplex operation as before, the UL Rx timing of the gNB may be advanced by TA offset relative to the DL Tx timing like the operation of the existing gNB. This is because it takes time to perform uplink to downlink switching for uplink transmission in a downlink time resource after uplink reception in an uplink time resource.

On the other hand, in the second time resource in which the gNB performs full duplex operation, it may be considered that the UL Rx timing and the DL Tx timing of the gNB coincide. When the gNB operates in full duplex, a downlink signal transmitted by the gNB may interfere with an uplink signal received by the gNB. The gNB needs to perform an operation of canceling self-interference from the uplink received signal, and it is advantageous for the timing of the downlink signal of the gNB to coincide with the timing of the uplink signal during this self-interference cancellation operation.

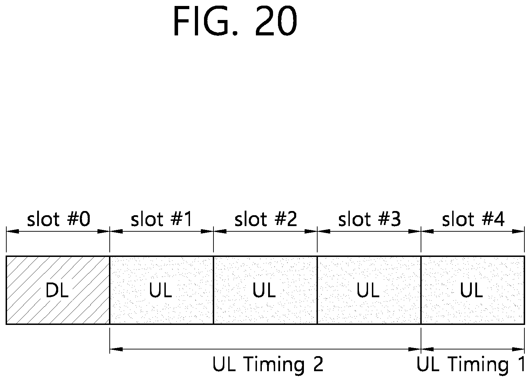

FIG. 20 schematically illustrates an example in which UL timing is set differently according to time resources.

Considering this point, UL Rx timing in the first time resource and UL Rx timing in the second time resource may be applied differently from the gNB point of view. This means that the UL Tx timing of the UE in the first time resource and the UL Tx timing of the UE in the second time resource may be different from each other. In this case, when the UL Tx timing of the UE in the first time resource is UL timing 1 and the UL Tx timing of the UE in the second time resource is UL timing 2, UL timing 1 may be ahead of UL timing 2 by T_alpha. That is, UL timing 2 may be equal to UL timing 1 + T_alpha. For example, as shown in FIG. 20, the UE performs uplink transmission through slots #1 to #4, slots #0 and #4 may be included in the first time resource, and slots #1 to #3 may be included in the second time resource. In this case, the UE may perform uplink transmission by applying UL timing 2 in slots #1 to #3, and perform uplink transmission by applying UL timing 1 in slot #4.

When the UE performs uplink transmission using UL timing 2 in slot #n and uplink transmission using UL timing 1 in slot #n+1, since UL timing 1 is earlier than UL timing 2, overlap occurs between uplink transmission in slot #n and uplink transmission in slot #n+1. In this case, some symbol resources of slot #n and/or slot #n+1 may be set as gap symbols so that the UE may not perform uplink transmission in the corresponding symbols. That is, when switching from a second time resource to which UL timing 2 is applied to a first time resource to which UL timing 1 is applied, some symbol resources before and after switching may be set as gap symbols.

Meanwhile, the UE may perform repetition using K consecutive/non-contiguous slots from slot #n.

In this case, in PUSCH repetition type A of Rel-16, repetition is performed using K consecutive slots from slot #n, PUSCH transmission is ommitted in slots in which PUSCH transmission cannot be performed in at least one symbol among symbol resources indicated by time domain resource allocation (TDRA) of PUSCH among K slots.

In the enhanced PUSCH repetition type A considered in the coverage extension work item of Rel-17, repetition is performed using K slots available from slot #n. Here, an available slot means a slot in which all symbol resources indicated by time domain resource allocation (TDRA) of PUSCH are composed of symbols capable of performing PUSCH transmission. At this time, a symbol capable of PUSCH transmission means that at least all of the following conditions are satisfied.

- A symbol that is not indicated as downlink by tdd-UL-DL-ConfigurationCommon or tdd-UL-DL-ConfigurationDedicated.
- A symbol that is not SS/PBCH block symbol.

In the FD environment, considering that the UE performs uplink transmission by applying different UL Tx timings in the first time resource and the second time resource, it is proposed to determine available slots for PUSCH repetition(s) and perform PUSCH repetition as follows.

[Method 1]

To this end, when the UE first divides the time resource for performing uplink transmission into a first time resource and a second time resource, it is proposed that the slot resource performing the PUSCH repetition(s) consists only of the first time resource or only the second time resource. That is, when the UE repeats and transmits the PUSCH K times, it may transmit it using K slots available in the first time resource or the second time resource.

For example, Method 1 may correspond to an example in which the UE in FIG. 19 described above repeatedly transmits the PUSCH only on the first time resource or repeatedly transmits the PUSCH only on the second time resource.

In addition, the example of FIG. 19 may be described in more detail from the viewpoint of method 1 as follows.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

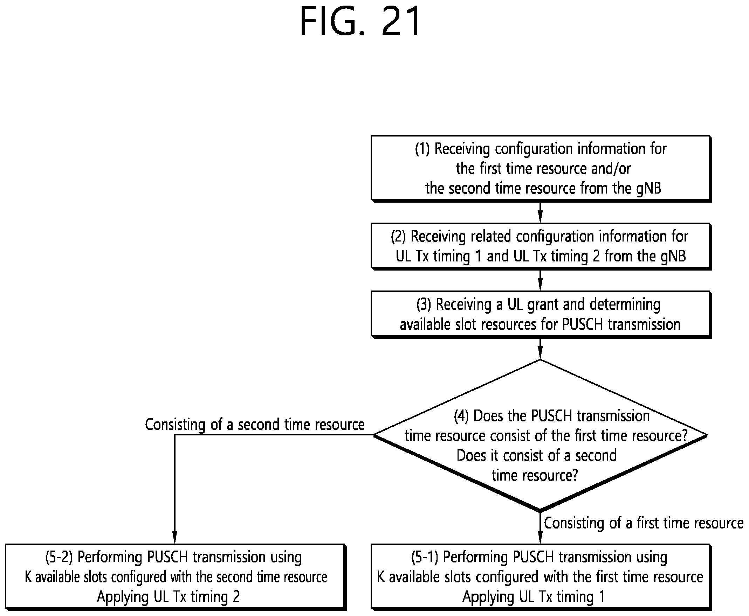

FIG. 21 is a flowchart of a method of repeatedly transmitting a PUSCH according to another embodiment of the present specification.

When the above method is applied, the UE may perform PUSCH repetition through the same process as shown in FIG. 21.

First, (1) the UE may receive related configuration information for the UE to determine the first time resource and the second time resource from the gNB. Through this, the UE determines a time resource corresponding to the first time resource and a time resource corresponding to the second time resource.

Additionally, (2) the UE may receive related configuration information for determining UL Tx timing 1 and UL Tx timing 2 from the gNB. Through this, the UE determines UL Tx timing 1 and UL Tx timing 2.

Thereafter, (3) the UE receives a UL grant for scheduling PUSCH repetition(s), and determines K available slot resources for related PUSCH transmission.

(4) The UE may perform a PUSCH repetition transmission operation differently depending on whether an available slot in which PUSCH repetition(s) is performed consists of a first time resource or a second time resource.

(5-1) When available slots in which PUSCH repetition(s) are performed are configured with the first time resource, the UE performs PUSCH repetition transmission using K available slots configured with the first time resource. In this case, the UE may additionally transmit by applying UL Tx timing 1 when transmitting the corresponding PUSCH repetition(s).

Or, (5-2) when the available slots in which PUSCH repetition(s) are performed are composed of the second time resource, the UE performs PUSCH repetition transmission using K available slots composed of the second time resource. In this case, the UE may additionally transmit by applying UL Tx timing 2 when transmitting the corresponding PUSCH repetition(s).

In this case, from the UE point of view, the first time resource and the second time resource may mean the following.

(a) The first time resource means a slot in which a cell operates in HD, and the second time resource means a slot in which a cell operates in FD. At this time, the UE may receive information on slots corresponding to the first time resource and/or the second time resource from the network.

(b) Considering that the resource direction of the first time resource operating in HD has cell-specific characteristics and the resource direction in the second time resource operating in FD has UE-specific characteristics, it may be determined that slots/symbols configured as downlink and/or uplink by tdd-UL-DL-ConfigurationCommon correspond to the first time resource, and slots/symbols configured as flexible correspond to the second time resource.

(c) Considering that the uplink Tx timing of the UE needs to be different when the gNB operates in HD and when it operates in FD, it may be determined that a time resource for performing uplink transmission by applying UL timing 1 corresponds to a first time resource, and a time resource for performing uplink transmission by applying UL timing 2 corresponds to a second time resource.

More specifically, a method for the UE to determine UL Tx timing 1 and UL Tx timing 2 in the process of (2) may be as follows.

(a) UL timing 1 is the same as the UL Tx timing determined by applying a timing advance (TA) value to the DL Rx timing as in the existing UE, and UL timing 2 may mean UL Tx timing delayed by T_alpha from UL timing 1. At this time, the UE may receive a value for T_alpha from the gNB and determine that UL timing 2 = UL timing 1 + T_alpha.

(b) Assuming that the UL Rx timing of the gNB is advanced by TA_offset relative to the DL Tx timing in the first time resource, it can be assumed that the UL timing 1 of the UE is also positioned ahead of the UL timing 2 by TA_offset. Therefore, the UE can assume that the value of T_alpha is always equal to TA_offset. That is, the UE may determine that UL timing 2 = UL timing 1 + TA_offset. The TA_offset value is a value set by the UE from the network, and may mean the n-timingAdvanceoffset value of TS 38.331.

In the process of (3) above, the UE can determine whether the K available slots for performing PUSCH repetition consist of only the first time resource or only the second time resource. At this time, the UE may determine whether the K available slots for performing PUSCH repetition are composed of only the first time resource or only the second time resource as follows.

(a) Depending on the location of the first slot performing the PUSCH repetition(s), whether an available slot in which a PUSCH repetition is transmitted consists of only the first time resource or only the second time resource may vary. For example, when the first slot (i.e., the slot in which the 0th PUSCH repetition is transmitted) for performing PUSCH repetition (s) corresponds to the first time, K available slots performing PUSCH repetition may all be configured with the first time resource. On the other hand, when the first slot (i.e., the slot in which the 0th PUSCH repetition is transmitted) for performing the PUSCH repetition(s) corresponds to the second time, K available slots for performing PUSCH repetition may all be configured with the second time resource.

As another example, when the slot indicated by the slot offset value (i.e., K2) between the PDCCH and the PUSCH indicated by the DCI including the PUSCH scheduling information corresponds to the first time, K available slots performing PUSCH repetition may all be configured with the first time resource. On the other hand, when the slot indicated by the slot offset value (i.e., K2) between the PDCCH and the PUSCH indicated by the DCI including the PUSCH scheduling information corresponds to the second time, K available slots for performing PUSCH repetition may all be configured with the second time resource.

(b) Whether an available slot in which a PUSCH repetition is transmitted consists of only the first time resource or only the second time resource may be indicated by RRC or DCI.

When a slot resource performing PUSCH repetition is configured as a first time resource, the UE determines that slots corresponding to the second time resource are not included in available slot resources capable of performing PUSCH repetition, and performs PUSCH transmission by determining an available slot among slot resources corresponding to the first time resource. At this time, the UE additionally performs PUSCH transmission by applying UL Tx timing 1.

On the other hand, when the slot resource for performing PUSCH repetition is composed of the second time resource, the UE determines that slots corresponding to the first time resource are not included in available slot resources capable of performing PUSCH repetition, and performs PUSCH transmission by determining an available slot among slot resources corresponding to the second time resource. At this time, the UE additionally performs PUSCH transmission by applying UL Tx timing 2.

[Method 2]

Alternatively, when the UE divides the time resource for performing uplink transmission into a first time resource and a second time resource, the slot resource for performing PUSCH repetition (s) can be configured using both the first time resource and the second time resource. That is, when the UE repeats and transmits the PUSCH K times, it may transmit it using K available slots within the first and second time resources.

Method 2 may correspond to, for example, an example in which the UE in FIG. 19 described above repeatedly transmits the PUSCH using both the first time resource and the second time resource.

In addition, the example of FIG. 19 may be described in more detail from the viewpoint of method 2 as follows.

Hereinafter, for a better understanding of the examples of the present specification, the disclosure of the present specification will be described through drawings. The following drawings are made to explain a specific example of the present specification. Since the names of specific devices or names of specific signals/messages/fields described in the drawings are provided as examples, the technical features of the present specification are not limited to the specific names used in the drawings below.

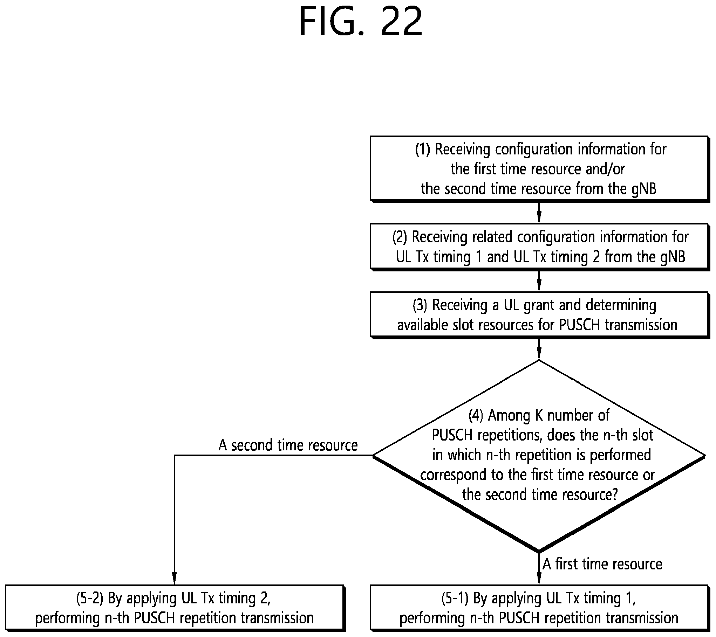

FIG. 22 is a flowchart of a method of repeatedly transmitting a PUSCH according to another embodiment of the present specification.

When the above method is applied, the UE may perform PUSCH repetition through the process shown in FIG. 22.

First, (1) the UE may receive related configuration information for the UE to determine the first time resource and the second time resource from the gNB. Through this, the UE determines a time resource corresponding to the first time resource and a time resource corresponding to the second time resource.

Additionally (2), the UE may receive related configuration information for determining UL Tx timing 1 and UL Tx timing 2 from the gNB. Through this, the UE determines UL Tx timing 1 and UL Tx timing 2.

Thereafter (3), the UE receives a UL grant for scheduling PUSCH repetition(s), and determines K available slot resources for related PUSCH transmission.

The UE performs transmission using PUSCH repetition using the corresponding K slots, wherein (4) the UE may perform different PUSCH transmission operations in the corresponding slot according to whether the slot in which PUSCH repetition(s) is performed corresponds to the first time resource or the second time resource.

(5-1) When a slot in which PUSCH transmission is performed corresponds to the first time resource, the UE performs PUSCH transmission in the corresponding slot by applying UL timing 1, (5-2) when a slot in which PUSCH transmission is performed corresponds to the second time resource, the UE performs PUSCH transmission in the corresponding slot by applying UL timing 2.

In this case, when the UE determines K available slots used for PUSCH transmission in the process of (3) and performs PUSCH transmission in the corresponding available slots, the following operation may be additionally considered.

When PUSCH is transmitted in the conventional PUSCH repetition type A scheme, the PUSCH is transmitted by applying the same TDRA in K slots in which the PUSCH is transmitted. That is, it is transmitted using the same symbol resource (same symbol location and number) for all PUSCH transmission slots. Therefore, if some of the symbol resources to be used for PUSCH transmission in a specific slot are not used for PUSCH transmission, it may be considered that the corresponding slot is not included in the available slots and is not used for PUSCH transmission.

Meanwhile, considering that different UL Tx timings are applied in the first time resource and in the second time resource as shown in FIG. 20, when switching from a second time resource to which UL timing 2 is applied to a first time resource to which UL timing 1 is applied, some symbol resources before and after switching may be used as gap symbols. In this case, even if a specific slot is configured as a UL resource, some symbol resources may be used as gap symbols and thus UL transmission may not be performed on the corresponding symbol. If, because of this gap symbol, PUSCH repetition transmission cannot be performed in every UL slot in which the gap symbol exists, it may be a disadvantage in terms of latency reduction or resource utilization of PUSCH transmission. Therefore, considering this point, when some of the symbol resources to be used for PUSCH transmission in a specific slot are used as gap symbols, the following operation can be considered in the corresponding slot.

(a) When transmitting a PUSCH in a specific slot, if some symbols among symbol resources indicated to be used for PUSCH transmission are used as gap symbols, the UE punctures and transmits the PUSCH transmission in the corresponding symbol. That is, the gap symbol does not affect the determination of available slots for PUSCH transmission, and when PUSCH is transmitted in the corresponding slot, PUSCH transmission is punctured in the gap symbol.

In this case, PUSCH transmission can be performed even in a slot in which a gap symbol exists, which is helpful in terms of latency reduction or resource utilization.

(b) When transmitting PUSCH in a specific slot, if some symbols among symbol resources indicated to be used for PUSCH transmission are used as gap symbols, the UE determines that the corresponding slot is not included in the available slots for PUSCH repetition. That is, when determining K PUSCH repetition transmission slots, if some symbols among symbol resources indicated to be used for PUSCH transmission in a specific slot are used as gap symbols, the corresponding slots are excluded from the PUSCH transmission slots.

In this case, stable PUSCH performance can be obtained by excluding slots in which PUSCH cannot be properly transmitted from available slots.

In this case, when transmitting the PUSCH in a specific slot, the operation of the UE may vary depending on the number of gap symbols in some of the symbol resources indicated to be used for PUSCH transmission. For example, if the number of symbols used as gap symbols among symbol resources indicated to be used for PUSCH transmission is M or less, the UE applies the method of (a) above, and if it is less than M, the UE uses the above (b) using the same method.

Depending on the implementation method of the UE, when the UE performs PUSCH repetition, it may be difficult to transmit by applying different Tx timings according to slots. Considering this case, the UE may report to the network whether it is possible to apply different Tx timings according to time resources. Based on this information, the network can configure a method of configuring time resources for PUSCH repetition to the UE. The UE may perform, according to the configuration information, PUSCH repetition using only the first time interval or the second time interval by applying method 1, or PUSCH repetition using both the first time interval and the second time interval by applying method 2.

Meanwhile, depending on the implementation method of the gNB, the value of TA_offset may be 0 even during a time interval in which the gNB operates in half-duplex mode. That is, the UL Rx timing of the gNB may be the same in the first time resource and the second time resource. In this case, it may be considered that the UE applies a different method among method 1 and method 2 according to the UL Rx timing applied by the gNB in the first time resource.

- For example, when the UE receives the value of TA_offset set to a value other than 0, the UE applies method 1 to perform PUSCH repetition using only the first time interval or the second time interval. On the other hand, when the value of TA_offset is set to 0, the UE can perform PUSCH repetition using both the first time interval and the second time interval by applying method 2 above. At this time, since TA_offset is 0, the UE determines that UL Tx timing 2 is the same as UL Tx timing 1. The TA_offset value may mean the n-TimingAdvanceOffset value of TS 38.331.

- As another example, when the UE determines that UL timing 2 = UL timing 1 + T_alpha, and the value of T_alpha is set to a value other than 0, the UE may perform PUSCH repetition using only the first time interval or the second time interval by applying method 1 above. On the other hand, when the value of T_alpha is set to 0, the UE may perform PUSCH repetition using both the first time interval and the second time interval by applying method 2 above. At this time, the UE determines that UL Tx timing 2 is the same as UL Tx timing 1.

On the other hand, the contents to which the above-described examples are applied may be described as follows from various subject points of view.

The following drawings are made to explain a specific example of the present specification. Since the names of specific devices or names of specific signals/messages/fields described in the drawings are provided as examples, the technical features of the present specification are not limited to the specific names used in the drawings below.

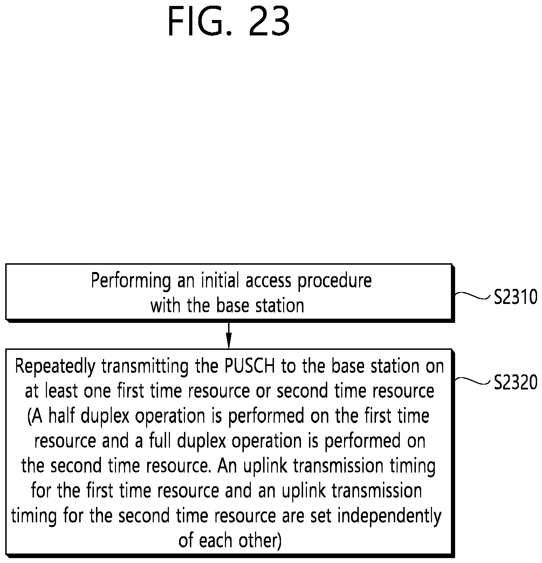

FIG. 23 is a flowchart of a method of repeatedly transmitting a PUSCH from a UE point of view according to an embodiment of the present specification.

According to FIG. 23, the UE may perform an initial access procedure with the base station (S2310). Since a more specific embodiment of this is the same as described above (and will be described later), repeated description of redundant content will be omitted for convenience of explanation.

The UE may repeatedly transmit the PUSCH to the base station on at least one first time resource or second time resource (S2320). Here, a half duplex operation may be performed on the first time resource, and a full duplex operation may be performed on the second time resource. In addition, uplink transmission timing for the first time resource and uplink transmission timing for the second time resource may be set independently of each other. Since a more specific embodiment of this is the same as described above (and will be described later), repeated description of redundant content will be omitted for convenience of explanation.

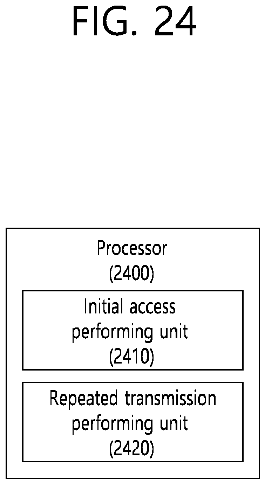

FIG. 24 is a block diagram of an apparatus for repeatedly transmitting a PUSCH from a UE point of view according to an embodiment of the present specification.

According to FIG. 24, a processor 2400 may include an initial access performing unit 2410 and an repeated transmission performing unit 2420.

The initial access performing unit 2410 may be configured to perform an initial access procedure with a base station. Since a more specific embodiment of this is the same as described above (and will be described later), repeated description of redundant content will be omitted for convenience of explanation.

The repeated transmission performing unit 2420 may be configured to control the transceiver to repeatedly transmit a physical uplink shared channel (PUSCH) to the base station on at least one first time resource or second time resource. Here, a half duplex operation may be performed on the first time resource, and a full duplex operation may be performed on the second time resource. In addition, uplink transmission timing for the first time resource and uplink transmission timing for the second time resource may be set independently of each other. Since a more specific embodiment of this is the same as described above (and will be described later), repeated description of redundant content will be omitted for convenience of explanation.

On the other hand, although not shown separately, the present specification may also include the following embodiments.

In one example, an apparatus includes at least one memory and at least one processor operatively coupled to the at least one memory. The at least one processor is configured to perform an initial access procedure with a base station and to control a transceiver to repeatedly transmit a physical uplink shared channel (PUSCH) to the base station on at least one first time resource or second time resource. A half duplex operation is performed on the first time resource and a full duplex operation is performed on the second time resource. And uplink transmission timing for the first time resource and uplink transmission timing for the second time resource may be set independently of each other. Since a more specific embodiment of this is the same as described above (and will be described later), repeated description of redundant content will be omitted for convenience of explanation.

Also, as an example, in at least one computer readable medium (CRM) containing instructions based on being executed by at least one processor, the CRM is configured to perform an initial access procedure with a base station and to control a transceiver to repeatedly transmit a physical uplink shared channel (PUSCH) to the base station on at least one first time resource or second time resource. Here, a half duplex operation is performed on the first time resource, a full duplex operation is performed on the second time resource, and the uplink transmission timing for the first time resource and the uplink transmission timing for the second time resource are set independently of each other. Since a more specific embodiment of this is the same as described above (and will be described later), repeated description of redundant content will be omitted for convenience of explanation.

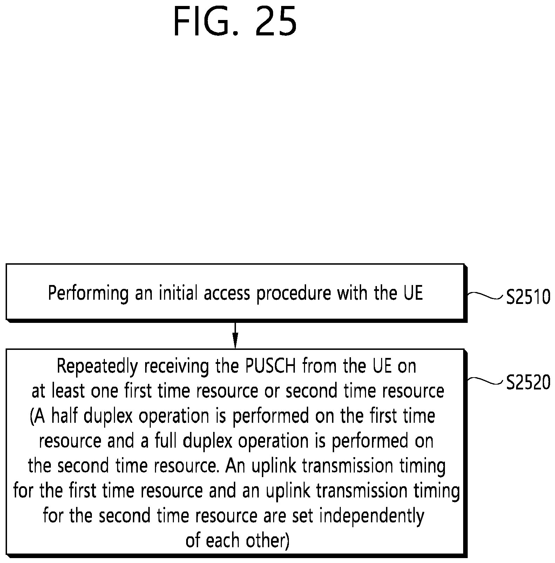

FIG. 25 is a sequence diagram of a method of repeatedly receiving a PUSCH from the point of view of a base station according to an embodiment of the present specification.

According to FIG. 25, the base station may perform an initial access procedure with the UE (S2510). Since a more specific embodiment of this is the same as described above (and will be described later), repeated description of redundant content will be omitted for convenience of explanation.

The base station may repeatedly receive the PUSCH from the UE on at least one first time resource or second time resource (S2520). Here, a half duplex operation may be performed on the first time resource, and a full duplex operation may be performed on the second time resource. In addition, uplink transmission timing for the first time resource and uplink transmission timing for the second time resource may be set independently of each other. Since a more specific embodiment of this is the same as described above (and will be described later), repeated description of redundant content will be omitted for convenience of explanation.

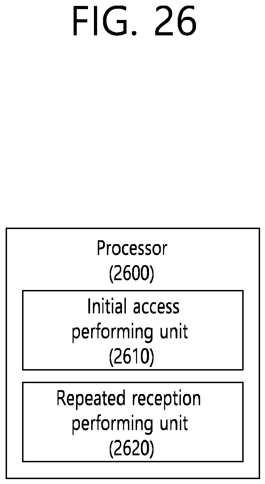

FIG. 26 is a block diagram of an apparatus for repeatedly receiving a PUSCH from the point of view of a base station according to an embodiment of the present specification.

According to FIG. 26, a processor 2600 may include an initial access performing unit 2610 and a repeated reception performing unit 2620.

The initial access performing unit 2610 may be configured to perform an initial access procedure with a UE. Since a more specific embodiment of this is the same as described above (and will be described later), repeated description of redundant content will be omitted for convenience of explanation.

The repeated reception performing unit 2620 may be configured to control the transceiver to repeatedly receive a physical uplink shared channel (PUSCH) from the UE on at least one first time resource or second time resource. Here, a half duplex operation may be performed on the first time resource, and a full duplex operation may be performed on the second time resource. In addition, uplink transmission timing for the first time resource and uplink transmission timing for the second time resource may be set independently of each other. Since a more specific embodiment of this is the same as described above (and will be described later), repeated description of redundant content will be omitted for convenience of explanation.

Meanwhile, in the present specification, a method for more efficiently using uplink resources during PUSCH repetition for PUSCH coverage extension is proposed. This embodiment can be combined with the above-described embodiment (s) as long as the components are not opposed to each other, or can operate separately from the above-described embodiment (s).

In the case of PUSCH repetition type A, PUSCH repetition is performed in units of slots using a plurality of slots. At this time, during PUSCH repetition, the position and number of symbols used for PUSCH transmission in each slot are configured identically. In this case, the location and number of symbols used for PUSCH transmission in each slot may be indicated by DCI scheduling the PUSCH.

In this case, when some or all of the symbols to be used for PUSCH transmission in a slot to be performed during PUSCH repetition are invalid for PUSCH transmission, PUSCH repetition is not performed in the corresponding slot. In this case, an invalid symbol may mean the following.

- Symbol set to downlink by semi-static TDD configuration (tdd-UL-DL-ConfigurationCommon, tdd-UL-DL-ConfigurationDedicated) and/or dynamic slot format indication.

- Symbol in which the SS/PBCH block is transmitted.

Therefore, if some symbols in the PUSCH transmission symbol position are not valid for PUSCH transmission, for example, in the case of a downlink slot entirely composed of downlink symbols or a special slot composed of downlink, flexible, and/or uplink symbols, the entire corresponding slot may not be used for PUSCH transmission.

More specifically, when transmitting using the current PUSCH repetition type A, transmission can be performed as follows. When there is a gap time required for the UE to transmit the PUSCH after receiving the PDCCH for scheduling the PUSCH, the PUSCH transmission start symbol should be located after the gap time from the symbol where the PDCCH transmission ends.

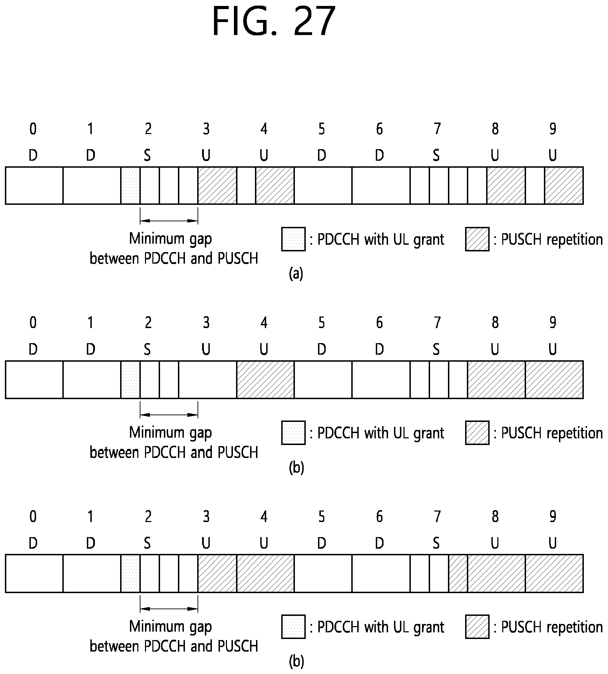

FIG. 27 schematically illustrates an example of repetition of PUSCH.

In (a) of FIG. 27, the PDCCH scheduling the PUSCH is transmitted in slot #2. The PUSCH scheduled by the PDCCH may be scheduled after a gap time after transmission of the PDCCH is terminated. Therefore, the PUSCH can be scheduled to be transmitted from a specific symbol position of slot #3, which is the earliest point in time at which the PUSCH can be transmitted. In this case, since only some symbols of slot #3 are used for PUSCH transmission, PUSCH repetition is performed using only the same symbols in other slots. Therefore, during PUSCH repetition, all uplink symbols of each uplink slot cannot be used, resulting in inefficient transmission.

In order to make maximum use of uplink symbols of each uplink slot, PUSCH can be scheduled as shown in (b) of FIG. 27. In (b) of FIG. 27, PUSCH transmission starts in slot #4 instead of slot #3. This is because all symbols of the slot can be used for PUSCH transmission in slot #3. Therefore, it is efficient to perform PUSCH repetition using all symbols in other uplink slots where PUSCH repetition is performed. In this case, maximum symbol resources of each uplink slot can be used for PUSCH transmission, but uplink symbols of slot #3 and uplink symbols existing in special slots cannot be used for PUSCH repetition.

Therefore, in this specification, even when only some symbols of slots can be used for PUSCH transmission, such as uplink slot #3 and special slot #7 in FIG. 27, a method of using the corresponding uplink symbol for PUSCH repetition is proposed. That is, as shown in (c) of FIG. 27, a method of using uplink symbols from a PUSCH repetition start slot to an end slot as much as possible for PUSCH repetition is proposed.

A. PUSCH transmission symbol resource configuration method

As described above, a method for setting/determining PUSCH transmission symbol resources is proposed in order to use uplink symbols from the PUSCH repetition start slot to the end slot as much as possible for PUSCH repetition.

To this end, independent SLIVs may be applied to a first PUSCH transmission slot and the remaining PUSCH transmission slots among a plurality of slots in which PUSCHs are repeatedly transmitted. Alternatively, independent SLIV may be applied to each slot for a plurality of slots in which the PUSCH is transmitted through repetition. At this time, SLIV may be replaced with start symbol and symbol length information through which PUSCH is transmitted in the slot. More specifically, PUSCH transmission symbols may be determined for a plurality of slots in which the PUSCH is repeatedly transmitted as follows.

A method of configuring/determining symbol resources through which the PUSCH is transmitted may be commonly applied to the first slot and the remaining slots in which the PUSCH is repeatedly transmitted, or may be applied differently. In this specification, a method of determining symbol resources of the first PUSCH transmission slot and a method of determining symbol resources of the remaining PUSCH transmission slots are separately described, the content of the specification includes that the symbol resource determination method of the remaining PUSCH transmission slots is commonly applied to the symbol resources of all PUSCH transmission slots.

(1) Method of determining symbol resources of the first PUSCH transmission slot.

- Method 1
  The UE receives SLIV information (SLIV 1) for PUSCH transmission in the first PUSCH transmission slot from the gNB. The indicated SLIV information (SLIV 1) is applied only to the first PUSCH transmission slot.
- Method 2
  For the first PUSCH transmission slot, the UE receives an indication from the gNB for only the start symbol position instead of SLIV information. At this time, the position of the symbol at which transmission of the PUSCH starts within the slot is determined by the indicated start symbol position, and the symbol length is determined as '14 - start symbol'. That is, the PUSCH transmission symbols are composed of the indicated start symbol to the last symbol of the slot.
- Method 3
  For the first PUSCH transmission slot, the UE receives instructions from the gNB for only the start symbol position instead of SLIV information. At this time, the position of the symbol where transmission of the PUSCH in the slot starts is determined by the position of the indicated start symbol, and the last uplink symbol (or flexible symbol) in the slot is determined as the last symbol constituting PUSCH transmission.

- Method 4

The UE does not receive SLIV information for the first PUSCH transmission slot, but receives only location information (slot location where PUSCH transmission starts) of the first PUSCH transmission slot. In this case, the UE may determine that the start symbol of PUSCH transmission = 0 and the symbol length = 14. That is, all symbols in the slot may be determined as PUSCH transmission symbols.

- Method 5

The UE does not receive SLIV information for the first PUSCH transmission slot, but receives only location information (slot location where PUSCH transmission starts) of the first PUSCH transmission slot. At this time, if consecutive symbols from symbol #n to symbol #m in the slot are uplink (or flexible), the UE determines symbol #n as the start symbol of PUSCH transmission and 'm-n+1' as the symbol length. That is, the first uplink symbol (or flexible symbol) in the slot is determined as a start symbol constituting PUSCH transmission, and the last uplink symbol (or flexible symbol) in the slot is determined as the last symbol constituting PUSCH transmission.

In this case, the flexible symbol may be limited to a flexible symbol other than the SS/PBCH block symbol.

- Method 6

The UE receives SLIV information (SLIV 1) for PUSCH transmission in the first PUSCH transmission slot from the gNB. At this time, the UE determines a symbol having a larger symbol index among the symbol at the indicated start symbol position and the first uplink symbol (or flexible symbol) in the slot as the start symbol constituting the PUSCH transmission. Also, the UE determines a symbol with a smaller symbol index among the symbol at the last symbol position determined by the indicated symbol length and the last uplink symbol (or flexible symbol) in the slot as the last symbol constituting PUSCH transmission. That is, among PUSCH transmission symbol resources determined from SLIV information for PUSCH transmission, the UE determines only symbol resources set to uplink (or flexible) as symbol resources constituting actual PUSCH transmission.

- At this time, the flexible symbol may be limited to a flexible symbol other than the SS/PBCH block symbol.

The UE receives an indication of SLIV information for PUSCH transmission in the PUSCH transmission slot from the gNB. This SLIV value may be commonly applied to all slots in which PUSCH is repeatedly transmitted or may be applied only to the first PUSCH transmission slot. Independently of this, there may be a minimum gap time value required from receiving a PDCCH scheduling PUSCH transmission to starting PUSCH transmission. Characteristically, the UE can receive this minimum gap time value set by the gNB. At this time, when the UE transmits the PUSCH in the first PUSCH transmission slot, if the gap between the last symbol receiving the PDCCH and the location of the PUSCH transmission start symbol set to DCI is greater than or equal to the minimum gap time, the UE starts transmission at the PUSCH transmission start symbol position indicated by DCI, otherwise, PUSCH transmission actually starts in a symbol after the minimum gap time from the last symbol in which the PDCCH is received.

(2) Method of determining symbol resources of remaining PUSCH transmission slots.

- Method a

The UE receives SLIV information (SLIV 2) for PUSCH transmissions other than the first PUSCH transmission slot from the gNB. This SLIV information (SLIV 2) is set independently of SLIV information (SLIV 1) for PUSCH transmission in the first PUSCH transmission slot.

- Method b

The UE may determine that the start symbol of the PUSCH transmission = 0 and the symbol length = 14 for the remaining PUSCH transmissions except for the first PUSCH transmission slot without an indication of separate SLIV information. That is, all symbols in the slot may be determined as PUSCH transmission symbols.

- Method c

If the UE does not receive instructions for separate SLIV information for the remaining PUSCH transmissions except for the first PUSCH transmission slot, and symbols #n to symbol #m in the slot are uplink (or flexible), the UE determines symbol #n as a start symbol of PUSCH transmission, and 'm-n+1' as a symbol length. That is, the uplink symbol (or flexible symbol) located at the front in the slot is determined as a start symbol constituting PUSCH transmission, and the last uplink symbol (or flexible symbol) in the slot is determined as the last symbol constituting PUSCH transmission.

In this case, the flexible symbol may be limited to a flexible symbol other than the SS/PBCH block symbol.

- Method d

The UE receives SLIV information (SLIV 2) for PUSCH transmissions other than the first PUSCH transmission slot from the gNB. In this case, SLIV2 may be the same as SLIV information (SLIV 1) for PUSCH transmission in the first PUSCH transmission slot. That is, one SLIV may be indicated and commonly applied to all PUSCH transmission slots. At this time, a symbol having a larger symbol index among the symbol at the indicated start symbol position and the first uplink symbol (or flexible symbol) in the slot is determined by the UE as a start symbol constituting PUSCH transmission. In addition, the UE determines a symbol having a smaller symbol index among the symbol at the last symbol position determined by the indicated symbol length and the uplink symbol (or flexible symbol) located at the end in the slot as the last constituting PUSCH transmission. That is, among PUSCH transmission symbol resources determined from SLIV information for PUSCH transmission, the UE determines only symbol resources configured for uplink (or flexible) as symbol resources constituting actual PUSCH transmission.

In this case, the flexible symbol may be limited to a flexible symbol other than the SS/PBCH block symbol.

- Method e

The UE is instructed by the gNB of two SLIVs, SLIV_O and SLIV_I, for PUSCH transmission. Each piece of SLIV information corresponding to SLIV_O and SLIV_I may be replaced with a start symbol and/or symbol length. Characteristically, SLIV_O can be set to start symbol = 0 and symbol length = 14 without separate instructions.

When the start symbol and the end symbol determined by SLIV_O are called start symbol_O and end symbol_O, respectively, and the start symbol and the end symbol determined by SLIV_I are called start symbol_I and end symbol_I, respectively, the transmission symbol interval of the PUSCH may start within the boundary of [start symbol_O, start symbol_I] and end within the boundary of [end symbol_O, end symbol_I].

More specifically, the transmission start symbol of the PUSCH may be the fastest symbol (with the lowest index) capable of transmitting the PUSCH within the boundary of [start symbol_O, start symbol_I]. In addition, the transmission end symbol of the PUSCH may be the latest symbol (with the highest index) that the PUSCH can transmit within the boundary of [end symbol_O, end symbol_I]. A symbol capable of transmitting a PUSCH may mean a symbol resource configured as uplink (or flexible).

In this case, the flexible symbol may be limited to a flexible symbol other than the SS/PBCH block symbol.

According to the above proposal, a PUSCH transmission symbol can be determined as follows.

For example, in the first slot in which the PUSCH is transmitted through repetition, the symbols constituting the PUSCH transmission are from the position of the start symbol indicated according to 'Method 1' to the last symbol of the slot. In the remaining slots, all symbols in the slot become symbols constituting PUSCH transmission according to 'Method b'.

As another example, in the first slot in which the PUSCH is repeated and transmitted, the symbols constituting the PUSCH transmission are from the position of the start symbol indicated according to 'Method 3' to the last uplink symbol (or flexible symbol) in the slot. In the remaining slots, symbols constituting PUSCH transmission are from the first uplink symbol (or flexible symbol) in the slot to the last uplink symbol (or flexible symbol) in the slot according to 'method c'.

As another example, symbols constituting PUSCH transmission are determined according to 'Method 5' in the first slot in which PUSCH is transmitted through repetition, and symbols constituting PUSCH transmission are determined according to 'Method c' in the remaining slots. That is, for all slots in which PUSCH is transmitted, symbols from the first uplink symbol (or flexible symbol) in each slot to the last uplink symbol (or flexible symbol) in the slot are symbols constituting PUSCH transmission in the corresponding slot.

B. PUSCH mapping method

When PUSCH is repeated and transmitted for a plurality of slots, the UE maps and transmits the PUSCH using symbol resources in which the PUSCH is transmitted in each slot. At this time, symbol resources constituting PUSCH transmission in each slot may be determined as in section A above. This section proposes a PUSCH mapping method in each slot.

- Method 1

The UE starts PUSCH mapping from a first symbol resource constituting PUSCH transmission of each slot and performs PUSCH mapping until the last symbol. At this time, if a symbol for which PUSCH transmission cannot be performed is included in the PUSCH mapping symbol resource, PUSCH transmission is not performed in the corresponding slot.

- Method 2

The UE starts PUSCH mapping from a first symbol resource constituting PUSCH transmission of each slot and performs PUSCH mapping until the last symbol. At this time, if a symbol for which PUSCH transmission cannot be performed is included in the PUSCH mapping symbol resource, PUSCH transmission may be rate-matched or punctured in a symbol in which PUSCH transmission cannot be performed. In this case, the symbol that cannot perform PUSCH transmission may include a downlink symbol and/or a flexible symbol with SS/PBCH block.

- At this time, characteristically, if the actual number of PUSCH transmission symbols excluding symbol resources for which PUSCH transmission cannot be performed is less than or equal to a specific number (i.e., the minimum number of PUSCH symbol(s)), PUSCH transmission may not be performed in the corresponding slot. In this case, the minimum number of PUSCH symbol(s) may be a fixed value or a value configured by RRC/DCI from the gNB.

Even if PUSCH transmission is performed through some symbols in a slot, the UE performs PUSCH mapping from the first symbol (symbol #0) in the slot. In this case, PUSCH mapping may be punctured in symbol resources not constituting PUSCH transmission or symbol resources in which PUSCH transmission cannot be performed. In this case, the symbol that cannot perform PUSCH transmission may include a downlink symbol and/or a flexible symbol with SS/PBCH block.

At this time, characteristically, if the actual number of PUSCH transmission symbols excluding symbol resources for which PUSCH transmission cannot be performed is less than or equal to a specific number (i.e., the minimum number of PUSCH symbol(s)), PUSCH transmission may not be performed in the corresponding slot. In this case, the minimum number of PUSCH symbol(s) may be a fixed value or a value configured by RRC/DCI from the gNB.

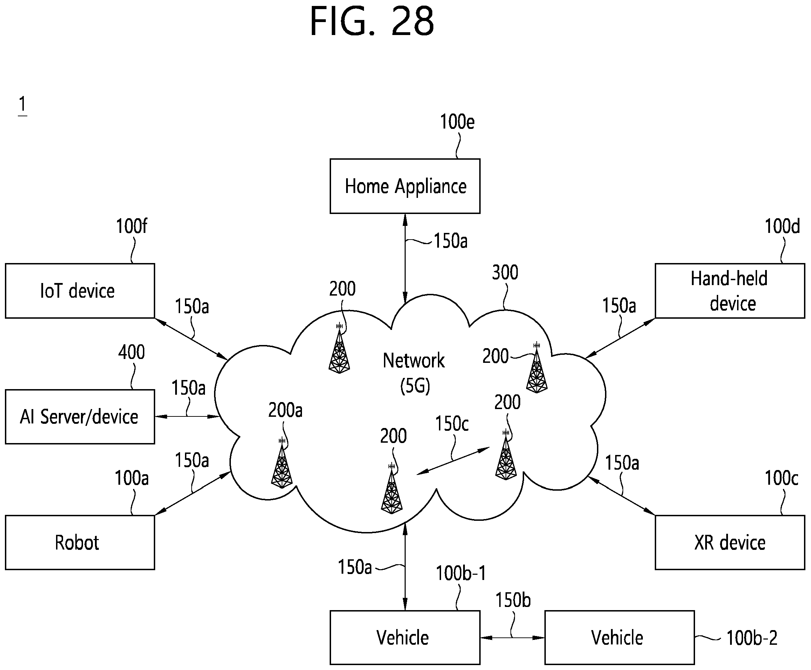

FIG. 28 illustrates a communication system 1 applied to the disclosure.

Referring to FIG. 28, the communication system 1 applied to this specification includes a wireless device, a base station, and a network. Here, the wireless device refers to a device that performs communication using a radio access technology (e.g., 5G new RAT (NR) or Long-Term Evolution (LTE)) and may be referred to as a communication/wireless/5G device. The wireless device may include, but limited to, a robot 100a, a vehicle 100b-1 and 100b-2, an extended reality (XR) device 100c, a hand-held device 100d, a home appliance 100e, an Internet of things (IoT) device 100f, and an AI device/server 400. For example, the vehicle may include a vehicle having a wireless communication function, an autonomous driving vehicle, a vehicle capable of inter-vehicle communication, or the like. Here, the vehicle may include an unmanned aerial vehicle (UAV) (e.g., a drone). The XR device may include augmented reality (AR)/virtual reality (VR)/mixed reality (MR) devices and may be configured as a head-mounted device (HMD), a vehicular head-up display (HUD), a television, a smartphone, a computer, a wearable device, a home appliance, digital signage, a vehicle, a robot, or the like. The hand-held device may include a smartphone, a smartpad, a wearable device (e.g., a smart watch or smart glasses), and a computer (e.g., a notebook). The home appliance may include a TV, a refrigerator, a washing machine, and the like. The IoT device may include a sensor, a smart meter, and the like. The base station and the network may be configured, for example, as wireless devices, and a specific wireless device 200a may operate as a base station/network node for other wireless devices.

The wireless devices 100a to 100f may be connected to the network 300 through the base station 200. Artificial intelligence (AI) technology may be applied to the wireless devices 100a to 100f, and the wireless devices 100a to 100f may be connected to an AI server 400 through the network 300. The network 300 may be configured using a 3G network, a 4G (e.g., LTE) network, or a 5G (e.g., NR) network. The wireless devices 100a to 100f may communicate with each other via the base station 200/network 300 and may also perform direct communication (e.g. sidelink communication) with each other without passing through the base station/network. For example, the vehicles 100b-1 and 100b-2 may perform direct communication (e.g. vehicle-to-vehicle (V2V)/vehicle-to-everything (V2X) communication). Further, the IoT device (e.g., a sensor) may directly communicate with another IoT device (e.g., a sensor) or another wireless device 100a to 100f.

Wireless communications/connections 150a, 150b, and 150c may be established between the wireless devices 100a to 100f and the base station 200 and between the base stations 200. Here, the wireless communications/connections may be established by various wireless access technologies (e.g., 5GNR), such as uplink/downlink communication 150a, sidelink communication 150b (or D2D communication), and inter-base station communication 150c (e.g., relay or integrated access backhaul (IAB)). The wireless devices and the base station/wireless devices, and the base stations may transmit/receive radio signals to/from each other through the wireless communications/connections 150a, 150b, and 150c. For example, the wireless communications/connections 150a, 150b, and 150c may transmit/receive signals over various physical channels. To this end, at least some of various configuration information setting processes, various signal processing processes (e.g., channel encoding/decoding, modulation/demodulation, resource mapping/demapping, and the like), and resource allocation processes may be performed on the basis of various proposals of the disclosure.

Meanwhile, NR supports a plurality of numerologies (or a plurality of ranges of subcarrier spacing (SCS)) in order to support a variety of 5G services. For example, when SCS is 15 kHz, a wide area in traditional cellular bands is supported; when SCS is 30 kHz/60 kHz, a dense-urban, lower-latency, and wider-carrier bandwidth is supported; when SCS is 60 kHz or higher, a bandwidth greater than 24.25 GHz is supported to overcome phase noise.

NR frequency bands may be defined as frequency ranges of two types (FR1 and FR2). The values of the frequency ranges may be changed. For example, the frequency ranges of the two types (FR1 and FR2) may be as shown in Table 5. For convenience of description, FR1 of the frequency ranges used for an NR system may refer to a "sub 6 GHz range", and FR2 may refer to an "above 6 GHz range" and may be referred to as a millimeter wave (mmW).

[Table 5]

| Frequency range designation | Corresponding frequency range | Subcarrier spacing |
|---|---|---|
| FR1 | 450 MHz - 6000 MHz | 15, 30, 60 kHz |
| FR2 | 24250 MHz - 52600 MHz | 60, 120, 240 kHz |

As illustrated above, the values of the frequency ranges for the NR system may be changed. For example, FR1 may include a band from 410 MHz to 7125 MHz as shown in Table 6. That is, FR1 may include a frequency band of 6 GHz (or 5850, 5900, 5925 MHz, or the like) or greater. For example, the frequency band of 6 GHz (or 5850, 5900, 5925 MHz, or the like) or greater included in FR1 may include an unlicensed band. The unlicensed bands may be used for a variety of purposes, for example, for vehicular communication (e.g., autonomous driving).

[Table 6]

| Frequency range designation | Corresponding frequency range | Subcarrier spacing |
|---|---|---|
| FR1 | 410 MHz - 7125 MHz | 15, 30, 60 kHz |
| FR2 | 24250 MHz - 52600 MHz | 60, 120, 240 kHz |

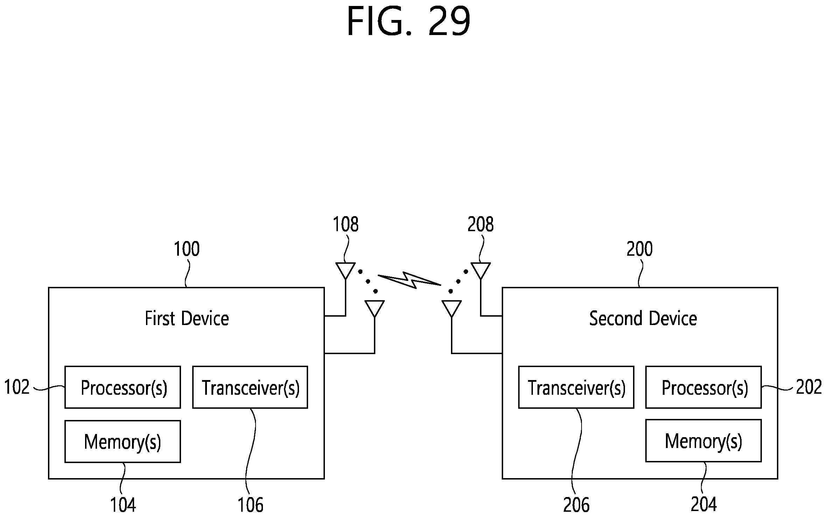

Hereinafter, an example of a wireless device to which the present specification is applied will be described. FIG. 29 illustrates a wireless device that is applicable to this specification.

Referring to FIG. 29, a first wireless device 100 and a second wireless device 200 may transmit and receive radio signals through various radio access technologies (e.g., LTE and NR). Here, the first wireless device 100 and the second wireless device 200 may respectively correspond to a wireless device 100x and the base station 200, and/or may respectively correspond to a wireless device 100x and a wireless device 100x of FIG. 28.

The first wireless device 100 includes at least one processor 102 and at least one memory 104 and may further include at least one transceiver 106 and/or at least one antenna 108. The processor 102 may be configured to control the memory 104 and/or the transceiver 106 and to implement the descriptions, functions, procedures, proposals, methods, and/or operational flowcharts disclosed herein. For example, the processor 102 may process information in the memory 104 to generate first information/signal and may then transmit a radio signal including the first information/signal through the transceiver 106. In addition, the processor 102 may receive a radio signal including second information/signal through the transceiver 106 and may store information obtained from signal processing of the second information/signal in the memory 104. The memory 104 may be connected to the processor 102 and may store various pieces of information related to the operation of the processor 102. For example, the memory 104 may store a software code including instructions to perform some or all of processes controlled by the processor 102 or to perform the descriptions, functions, procedures, proposals, methods, and/or operational flowcharts disclosed herein. Here, the processor 102 and the memory 104 may be part of a communication modem/circuit/chip designed to implement a radio communication technology (e.g., LTE or NR). The transceiver 106 may be connected with the processor 102 and may transmit and/or receive a radio signal via the at least one antennas 108. The transceiver 106 may include a transmitter and/or a receiver. The transceiver 106 may be replaced with a radio frequency (RF) unit. In the specification, the wireless device may refer to a communication modem/circuit/chip.

The second wireless device 200 includes at least one processor 202 and at least one memory 204 and may further include at least one transceiver 206 and/or at least one antenna 208. The processor 202 may be configured to control the memory 204 and/or the transceiver 206 and to implement the descriptions, functions, procedures, proposals, methods, and/or operational flowcharts disclosed herein. For example, the processor 202 may process information in the memory 204 to generate third information/signal and may then transmit a radio signal including the third information/signal through the transceiver 206. In addition, the processor 202 may receive a radio signal including fourth information/signal through the transceiver 206 and may store information obtained from signal processing of the fourth information/signal in the memory 204. The memory 204 may be connected to the processor 202 and may store various pieces of information related to the operation of the processor 202. For example, the memory 204 may store a software code including instructions to perform some or all of processes controlled by the processor 202 or to perform the descriptions, functions, procedures, proposals, methods, and/or operational flowcharts disclosed herein. Here, the processor 202 and the memory 204 may be part of a communication modem/circuit/chip designed to implement a radio communication technology (e.g., LTE or NR). The transceiver 206 may be connected with the processor 202 and may transmit and/or receive a radio signal via the at least one antennas 208. The transceiver 206 may include a transmitter and/or a receiver. The transceiver 206 may be replaced with an RF unit. In the specification, the wireless device may refer to a communication modem/circuit/chip.

Hereinafter, hardware elements of the wireless devices 100 and 200 are described in detail. At least one protocol layer may be implemented, but limited to, by the at least one processor 102 and 202. For example, the at least one processor 102 and 202 may implement at least one layer (e.g., a functional layer, such as PHY, MAC, RLC, PDCP, RRC, and SDAP layers). The at least one processor 102 and 202 may generate at least one protocol data unit (PDU) and/or at least one service data unit (SDU) according to the descriptions, functions, procedures, proposals, methods, and/or operational flowcharts disclosed herein. The at least one processor 102 and 202 may generate a message, control information, data, or information according to the descriptions, functions, procedures, proposals, methods, and/or operational flowcharts disclosed herein. The at least one processor 102 and 202 may generate a signal (e.g., a baseband signal) including a PDU, an SDU, a message, control information, data, or information according to the functions, procedures, proposals, and/or methods disclosed herein and may provide the signal to the at least one transceiver 106 and 206. The at least one processor 102 and 202 may receive a signal (e.g., a baseband signal) from the at least one transceiver 106 and 206 and may obtain a PDU, an SDU, a message, control information, data, or information according to the descriptions, functions, procedures, proposals, methods, and/or operational flowcharts disclosed herein.

The at least one processor 102 and 202 may be referred to as a controller, a microcontroller, a microprocessor, or a microcomputer. The at least one processor 102 and 202 may be implemented by hardware, firmware, software, or a combination thereof. For example, at least one application-specific integrated circuit (ASIC), at least one digital signal processor (DSP), at least one digital signal processing devices (DSPD), at least one programmable logic devices (PLD), or at least one field programmable gate array (FPGA) may be included in the at least one processor 102 and 202. The descriptions, functions, procedures, proposals, methods, and/or operational flowcharts disclosed herein may be implemented using firmware or software, and the firmware or software may be configured to include modules, procedures, functions, and the like. The firmware or software configured to perform the descriptions, functions, procedures, proposals, methods, and/or operational flowcharts disclosed herein may be included in the at least one processor 102 and 202 or may be stored in the at least one memory 104 and 204 and may be executed by the at least one processor 102 and 202. The descriptions, functions, procedures, proposals, methods, and/or operational flowcharts disclosed herein may be implemented in the form of a code, an instruction, and/or a set of instructions using firmware or software.

The at least one memory 104 and 204 may be connected to the at least one processor 102 and 202 and may store various forms of data, signals, messages, information, programs, codes, indications, and/or commands. The at least one memory 104 and 204 may be configured as a ROM, a RAM, an EPROM, a flash memory, a hard drive, a register, a cache memory, a computer-readable storage medium, and/or a combinations thereof. The at least one memory 104 and 204 may be disposed inside and/or outside the at least one processor 102 and 202. In addition, the at least one memory 104 and 204 may be connected to the at least one processor 102 and 202 through various techniques, such as a wired or wireless connection.

The at least one transceiver 106 and 206 may transmit user data, control information, a radio signal/channel, or the like mentioned in the methods and/or operational flowcharts disclosed herein to at least different device. The at least one transceiver 106 and 206 may receive user data, control information, a radio signal/channel, or the like mentioned in the descriptions, functions, procedures, proposals, methods, and/or operational flowcharts disclosed herein from at least one different device. For example, the at least one transceiver 106 and 206 may be connected to the at least one processor 102 and 202 and may transmit and receive a radio signal. For example, the at least one processor 102 and 202 may control the at least one transceiver 106 and 206 to transmit user data, control information, or a radio signal to at least one different device. In addition, the at least one processor 102 and 202 may control the at least one transceiver 106 and 206 to receive user data, control information, or a radio signal from at least one different device. The at least one transceiver 106 and 206 may be connected to the at least one antenna 108 and 208 and may be configured to transmit or receive user data, control information, a radio signal/channel, or the like mentioned in the descriptions, functions, procedures, proposals, methods, and/or operational flowcharts disclosed herein through the at least one antenna 108 and 208. In this document, the at least one antenna may be a plurality of physical antennas or may be a plurality of logical antennas (e.g., antenna ports). The at least one transceiver 106 and 206 may convert a received radio signal/channel from an RF band signal into a baseband signal in order to process received user data, control information, a radio signal/channel, or the like using the at least one processor 102 and 202. The at least one transceiver 106 and 206 may convert user data, control information, a radio signal/channel, or the like, processed using the at least one processor 102 and 202, from a baseband signal to an RF bad signal. To this end, the at least one transceiver 106 and 206 may include an (analog) oscillator and/or a filter.

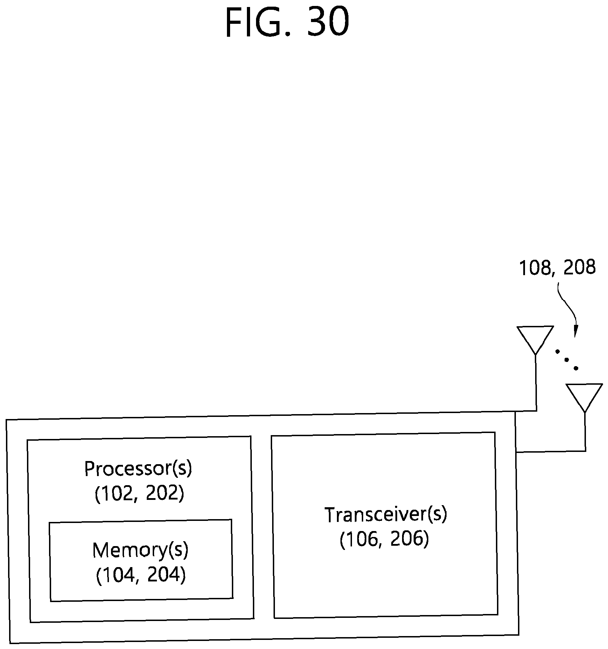

FIG. 30 shows another example of a wireless device applicable to the present specification.

According to FIG. 30, a wireless device may include at least one processor (102, 202), at least one memory (104, 204), at least one transceiver (106, 206), and one or more antennas (108, 208).

As a difference between the example of the wireless device described above in FIG. 29 and the example of the wireless device in FIG. 30, in FIG. 29, the processors 102 and 202 and the memories 104 and 204 are separated, but in the example of FIG. 30, the memory 104, 204 is included in the processor 102, 202.

Here, since the detailed description of the processors 102 and 202, the memories 104 and 204, the transceivers 106 and 206, and one or more antennas 108 and 208 have been described above, in order to avoid repetition of unnecessary description, Description of repeated description is omitted.

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method for repeatedly transmitting a physical uplink shared channel (PUSCH) performed by a user equipment (UE) in a wireless communication system, the method comprising:

    performing an initial access procedure with a base station; and
    transmitting the PUSCH to the base station repeatedly on at least one first time resource or second time resource, wherein a half-duplex operation is performed on the first time resource and a full duplex operation is performed on the second time resource, and
    wherein an uplink transmission timing for the first time resource and an uplink transmission timing for the second time resource are configured independently of each other.

2. The method of claim 1, wherein the UE repeatedly transmits the PUSCH only on the first time resource or repeatedly transmits the PUSCH only on the second time resource.

3. The method of claim 2, wherein based on that a resource for repeatedly transmitting the PUSCH is the first time resource, the UE determines that at least one slot corresponding to the second time resource is an unavailable slot, and the UE determines that at least one slot among slots corresponding to the first time resource as at least one available slot, and
    wherein the UE repeatedly transmits the PUSCH on the at least one available slot.

4. The method of claim 2, wherein based on that a resource for repeatedly transmitting the PUSCH is the second time resource, the UE determines that at least one slot corresponding to the first time resource is an unavailable slot, and the UE determines that at least one slot among slots corresponding to the second time resource as at least one available slot, and
    wherein the UE repeatedly transmits the PUSCH on the at least one available slot.

5. The method of claim 2, wherein based on that a first slot for repeatedly transmitting the PUSCH is the first time resource, the UE repeatedly transmits the PUSCH only on the first time resource.

6. The method of claim 2, wherein based on that a first slot for repeatedly transmitting the PUSCH is the second time resource, the UE repeatedly transmits the PUSCH only on the second time resource.

7. The method of claim 2, wherein based on a radio resource control (RRC) message or downlink control information (DCI), the UE is configured by the base station whether the PUSCH is repeatedly transmitted only in the first time resource or the PUSCH is repeatedly transmitted only in the second time resource.

8. The method of claim 1, wherein an uplink transmission timing for the first time resource and an uplink transmission timing for the second time resource are different from each other.

9. The method of claim 1, wherein the second time resource includes a first frequency resource and a second frequency resource in terms of frequency,

wherein an uplink operation is performed on the first frequency resource, and
wherein a downlink operation is performed in the second frequency resource.

10. The method of claim 1, wherein the UE repeatedly transmits the PUSCH using both the first time resource and the second time resource.

11. A user equipment (UE) comprising:

a transceiver;
at least one memory; and
at least one processor operably coupled with the at least one memory and the transceiver,
wherein the at least one processor is adapted to:

perform an initial access procedure with a base station; and
transmit a physical uplink shared channel (PUSCH) to the base station repeatedly on at least one first time resource or second time resource,
wherein a half-duplex operation is performed on the first time resource and a full duplex operation is performed on the second time resource, and
wherein an uplink transmission timing for the first time resource and an uplink transmission timing for the second time resource are configured independently of each other.

12. An apparatus, the apparatus comprising:

at least one memory; and
at least one processor operably coupled to the at least one memory,
wherein the at least one processor is adapted to:

perform an initial access procedure with a base station; and
transmit a physical uplink shared channel (PUSCH) to the base station repeatedly on at least one first time resource or second time resource,
wherein a half-duplex operation is performed on the first time resource and a full duplex operation is performed on the second time resource, and
wherein an uplink transmission timing for the first time resource and an uplink transmission timing for the second time resource are configured independently of each other.

13. At least one computer-readable medium (CRM) comprising an instruction based on being executed by at least one processor, wherein the instruction comprises:

performing an initial access procedure with a base station; and
transmitting a physical uplink shared channel (PUSCH) to the base station repeatedly on at least one first time resource or second time resource,
wherein a half-duplex operation is performed on the first time resource and a full duplex operation is performed on the second time resource, and
wherein an uplink transmission timing for the first time resource and an uplink transmission timing for the second time resource are configured independently of each other.

14. A method for repeatedly receiving a physical uplink shared channel (PUSCH) performed by a base station in a wireless communication system, the method comprising:

performing an initial access procedure with a user equipment (UE); and
receiving the PUSCH from the UE repeatedly on at least one first time resource or second time resource,
wherein a half-duplex operation is performed on the first time resource,
wherein a full duplex operation is performed on the second time resource, and
wherein an uplink transmission timing for the first time resource and an uplink transmission timing for the second time resource are configured independently of each other.

15. A base station comprising:

a transceiver;
at least one memory; and
at least one processor operably coupled with the at least one memory and the transceiver,
wherein the at least one processor is adapted to:

perform an initial access procedure with a user equipment (UE); and
receive the PUSCH from the UE repeatedly on at least one first time resource or second time resource,
wherein a half-duplex operation is performed on the first time resource,
wherein a full duplex operation is performed on the second time resource, and
wherein an uplink transmission timing for the first time resource and an uplink transmission timing for the second time resource are configured independently of each other.

# FIG. 1

# FIG. 2

**gNB**
- RRM between cells
- RB control
- Connection mobility control
- Wireless access control
- Measurement setting and providing
- Dynamic resource allocation (scheduler)

NG-RAN

**AMF**
- NAS security
- Idle state mobility processing

**UPF**
- Mobility anchoring
- PDU processing

5GC

**SMF**
- Terminal IP address allocation
- PDU session control

Internet

EP 4 203 369 A1

# FIG. 3

Frame (10 ms)

Subframe (1 ms)

15kHz 1Slot(14Symbol): 1ms Subframe

30kHz 1Slot(14Symbol): 0.5ms

60kHz 1Slot(14Symbol): 0.25ms

# FIG. 4

Downlink only, or Uplink only

Frequency

RB index

Symbol index

One TTI

: DL Control channel    : UL Control channel

# FIG. 5

enhanced mobile broadband(eMBB)

Gigabyte transfer per second

Artificial intelligence (e.g., big data)

3D video (4K screen)

Smart Home/Building

Work/play in the cloud

Augmented/Virtual/Mixed Reality

Voice

Industrial automation (e.g., robots)

Smart network (e.g., smart cities)

Mission-critical applications (e.g., healthcare)

Autonomous vehicles

massive MTC
(mMTC)

reliability/ultra-low latency communication
(URLLC)

edge computing

# FIG. 6

Carrier #0
Subband-wise Full Duplex

Carrier #0
Spectrum-Sharing Full Duplex

# FIG. 7

(a)

(b)

# FIG. 8

PUSCH repetition type A

# FIG. 9

(a) Nominal repetition

(b) Actual repetition

FIG. 10

# FIG. 11

A: The first time resource
B: The second time resource

(a)

The first frequency resource

The second frequency resource

The first frequency resource

(b)

# FIG. 12

A: The first time resource
B: The second time resource

(a)

The first frequency resource

The second frequency resource

(b)

# FIG. 13

# FIG. 14

**(a)**

Rep 0 | Rep 1 | Rep 2 | Rep 3 | Rep 4 | Rep 5 | Rep 6 | Rep 7

Invalid symbols

**(b)**

Rep 0 | Rep 1 | Invalid symbols | Rep 2 | Rep 3 | Rep 4 | Rep 5 | Rep 6

**(c)**

Rep 0 | Rep 1 | Invalid symbols | Rep 2 | Rep 3 | Rep 4 | Rep 5 | Rep 6

EP 4 203 369 A1

# FIG. 15

| 0 | 1 | 2 | 3 | 4 | 5 | 6 | 7 | 8 | 9 |
|---|---|---|---|---|---|---|---|---|---|
| D | D | S | U | U | D | D | S | U | U |

: PDCCH with UL grant    : PUSCH repetition

(a)

| 0 | 1 | 2 | 3 | 4 | 5 | 6 | 7 | 8 | 9 |
|---|---|---|---|---|---|---|---|---|---|
| D | D | S | U | U | D | D | S | U | U |

: PDCCH with UL grant    : PUSCH repetition

(b)

# FIG. 16

EP 4 203 369 A1

| 0 | 1 | 2 | 3 | 4 | 5 | 6 | 7 | 8 | 9 |
|---|---|---|---|---|---|---|---|---|---|
| D | D | S | U | U | D | D | S | U | U |

▨ : PDCCH with UL grant    ▢ : PUSCH repetition

(a)

| 0 | 1 | 2 | 3 | 4 | 5 | 6 | 7 | 8 | 9 |
|---|---|---|---|---|---|---|---|---|---|
| D | D | S | U | U | D | D | S | U | U |

▨ : PDCCH with UL grant    ▢ : PUSCH repetition

(b)

# FIG. 17

EP 4 203 369 A1

# FIG. 18

# FIG. 19

```
┌──────┐                                              ┌──────┐
│  UE  │                                              │  BS  │
└──┬───┘                                              └──┬───┘
   │                                                     │
   │         Initial access procedure                    │
   │<────────────────────────────────────────────────────│  S1910
   │                                                     │
```

Transmitting the PUSCH to the base station repeatedly on
at least one first time resource or second time resource
(A half duplex operation is performed on
the first time resource and a full duplex operation is
performed on the second time resource.
An uplink transmission timing for the first time resource
and an uplink transmission timing for the second time
resource are set independently of each other)

PUSCH

⋮

S1920

EP 4 203 369 A1

# FIG. 20

| slot #0 | slot #1 | slot #2 | slot #3 | slot #4 |
|---------|---------|---------|---------|---------|
| DL | UL | UL | UL | UL |

UL Timing 2      UL Timing 1

# FIG. 21

(1) Receiving configuration information for
the first time resource and/or
the second time resource from the gNB

↓

(2) Receiving related configuration information for
UL Tx timing 1 and UL Tx timing 2 from the gNB

↓

(3) Receiving a UL grant and determining
available slot resources for PUSCH transmission

↓

(4) Does the PUSCH transmission
time resource consist of the first time resource?
Does it consist of a second
time resource?

Consisting of a second time resource →

Consisting of a first time resource

(5-2) Performing PUSCH transmission using
K available slots configured with the second time resource
Applying UL Tx timing 2

(5-1) Performing PUSCH transmission using
K available slots configured with the first time resource
Applying UL Tx timing 1

# FIG. 22

```
┌─────────────────────────────────────────┐
│ (1) Receiving configuration information for │
│         the first time resource and/or      │
│   the second time resource from the gNB     │
└─────────────────────────────────────────┘
                      │
                      ▼
┌─────────────────────────────────────────┐
│ (2) Receiving related configuration information for │
│   UL Tx timing 1 and UL Tx timing 2 from the gNB   │
└─────────────────────────────────────────┘
                      │
                      ▼
┌─────────────────────────────────────────┐
│        (3) Receiving a UL grant and determining      │
│    available slot resources for PUSCH transmission   │
└─────────────────────────────────────────┘
                      │
                      ▼
            ╱◇╲
         (4) Among K number of
      PUSCH repetitions, does the n-th slot
      in which n-th repetition is performed
      correspond to the first time resource or
            the second time resource?
```

A second time resource

A first time resource

┌─────────────────────────────────────────┐
│ (5-2) By applying UL Tx timing 2,        │
│ performing n-th PUSCH repetition transmission │
└─────────────────────────────────────────┘

┌─────────────────────────────────────────┐
│ (5-1) By applying UL Tx timing 1,        │
│ performing n-th PUSCH repetition transmission │
└─────────────────────────────────────────┘

# FIG. 23

Performing an initial access procedure
with the base station ~S2310

Repeatedly transmitting the PUSCH to the base station on
at least one first time resource or second time resource
(A half duplex operation is performed on the first time
resource and a full duplex operation is performed on
the second time resource. An uplink transmission timing
for the first time resource and an uplink transmission
timing for the second time resource are set independently
of each other) ~S2320

# FIG. 24

Processor
(2400)

Initial access
performing unit
(2410)

Repeated transmission
performing unit
(2420)

# FIG. 25

Performing an initial access procedure with the UE ~S2510

Repeatedly receiving the PUSCH from the UE on
at least one first time resource or second time resource
(A half duplex operation is performed on the first time
resource and a full duplex operation is performed on
the second time resource. An uplink transmission timing
for the first time resource and an uplink transmission timing
for the second time resource are set independently
of each other) ~S2520

# FIG. 26

Processor
(2600)

Initial access
performing unit
(2610)

Repeated reception
performing unit
(2620)

# FIG. 27

0  1  2  3  4  5  6  7  8  9
D  D  S  U  U  D  D  S  U  U

Minimum gap
between PDCCH and PUSCH

☐ : PDCCH with UL grant    ▨ : PUSCH repetition

(a)

0  1  2  3  4  5  6  7  8  9
D  D  S  U  U  D  D  S  U  U

Minimum gap
between PDCCH and PUSCH

☐ : PDCCH with UL grant    ▨ : PUSCH repetition

(b)

0  1  2  3  4  5  6  7  8  9
D  D  S  U  U  D  D  S  U  U

Minimum gap
between PDCCH and PUSCH

☐ : PDCCH with UL grant    ▨ : PUSCH repetition

(b)

# FIG. 28

# FIG. 29

EP 4 203 369 A1

# FIG. 30

108, 208

Processor(s)
(102, 202)

Memory(s)
(104, 204)

Transceiver(s)
(106, 206)

## INTERNATIONAL SEARCH REPORT

| International application No. |
| --- |
| **PCT/KR2021/011220** |

**A.    CLASSIFICATION OF SUBJECT MATTER**

**H04L 5/00**(2006.01)i; **H04L 5/14**(2006.01)i; **H04L 1/08**(2006.01)i; **H04W 72/04**(2009.01)i; **H04W 72/12**(2009.01)i

According to International Patent Classification (IPC) or to both national classification and IPC

**B.    FIELDS SEARCHED**

Minimum documentation searched (classification system followed by classification symbols)

H04L 5/00(2006.01); H04W 52/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH(physical uplink shared channel), 반복(repetition), 하프 듀플렉스(half duplex), 풀 듀플렉스(full duplex)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2018-217428 A1 (QUALCOMM INCORPORATED) 29 November 2018 (2018-11-29) See paragraphs [0033], [0041]-[0043], [0048], [0060]-[0061], [0066] and [0089]-[0092]. | 1-2,7-15 |
| A | | 3-6 |
| A | ERICSSON. VoLTE quality improvements. R1-167671, 3GPP TSG RAN WG1 Meeting #86. Gothenburg , Sweden. 13 August 2016. See sections 3-4. | 1-15 |
| A | NTT DOCOMO, INC. Potential techniques for PUSCH coverage enhancements. R1-2006741, 3GPP TSG RAN WG1 Meeting #102-e. e-Meeting. 07 August 2020. See section 2.1; and figure 2. | 1-15 |
| A | SAMSUNG. PUSCH coverage enhancement. R1-2006162, 3GPP TSG RAN WG1 Meeting #102-e. e-Meeting. 08 August 2020. See section 2; and figure 1. | 1-15 |

☑ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 November 2021** | **01 December 2021** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2021/011220** |

**C. DOCUMENTS CONSIDERED TO BE RELEVANT**

| Category* | Citation of document, with indication, where appropriate, of the relevant passages | Relevant to claim No. |
| --- | --- | --- |
| A | WILUS INC. Discussion on potential techniques for PUSCH coverage enhancement. R1-2006892, 3GPP TSG RAN WG1 Meeting #102-e. e-Meeting. 08 August 2020. <br> See section 2. | 1-15 |

# EP 4 203 369 A1

## INTERNATIONAL SEARCH REPORT
### Information on patent family members

International application No.

**PCT/KR2021/011220**

| Patent document cited in search report | | | Publication date (day/month/year) | Patent family member(s) | | | Publication date (day/month/year) |
|---|---|---|---|---|---|---|---|
| WO | 2018-217428 | A1 | 29 November 2018 | BR | 112019024183 | A2 | 02 June 2020 |
| | | | | CN | 110679181 | A | 10 January 2020 |
| | | | | EP | 3625999 | A1 | 25 March 2020 |
| | | | | EP | 3625999 | B1 | 17 March 2021 |
| | | | | JP | 2020-521394 | A | 16 July 2020 |
| | | | | KR | 10-2020-0008616 | A | 28 January 2020 |
| | | | | TW | 201902271 | A | 01 January 2019 |
| | | | | US | 10484945 | B2 | 19 November 2019 |
| | | | | US | 2018-0343612 | A1 | 29 November 2018 |

Form PCT/ISA/210 (patent family annex) (July 2019)